# EUROPÄISCHE PATENTSCHRIFT

(11) **EP 3 825 103 B1**
(45) Veröffentlichungstag und Bekanntmachung des Hinweises auf die Patenterteilung: **30.10.2024**
(21) Anmeldenummer: 20209206.0
(22) Anmeldetag: 23.11.2020
(51) Int. Cl.: B29C 65/18, B29C 65/30, B65B 51/30

(54) **SIEGELVORRICHTUNG UND VERFAHREN ZU EINEM WECHSEL EINER SIEGELEINHEIT DER SIEGELVORRICHTUNG**
SEAL DEVICE AND METHOD FOR CHANGING A SEALING UNIT OF THE SEAL DEVICE
DISPOSITIF DE SCELLAGE ET PROCÉDÉ DE REMPLACEMENT D'UNE UNITÉ SCELLAGE DU DISPOSITIF DE SCELLAGE

(30) Priorität: 25.11.2019 DE 102019131843
(43) Veröffentlichungstag der Anmeldung: 26.05.2021
(73) Patentinhaber: Syntegon Packaging Systems AG, 8222 Beringen (CH)
(72) Erfinder: MAJ, Maurizio, 8222 Beringen (CH); THOMAS, Peter, 8222 Beringen (CH)
(74) Vertreter: Novagraaf Group

(56) Entgegenhaltungen:
- DE-B- 1 252 885
- GB-A- 632 204
- US-A- 4 736 568

## Beschreibung

### Stand der Technik

In GB 632 204 A ist bereits eine Siegelvorrichtung, insbesondere eine Siegelbacke, mit zumindest einer, insbesondere wechselbaren, Siegeleinheit zu einer Erstellung einer Siegelnaht, mit zumindest einer Heizeinheit zu einer Erhitzung der Siegeleinheit, mit zumindest einem Lagerelement, das dazu vorgesehen ist, die zumindest eine Heizeinheit beweglich zu lagern, und mit zumindest einer Entkopplungseinheit, die dazu vorgesehen ist, die zumindest eine Heizeinheit von zumindest einer auf die Siegeleinheit wirkenden Prozesskraft und/oder Verbindungskraft zumindest teilweise zu entkoppeln, vorgeschlagen worden.

Des Weiteren sind aus US 4 736 568 A und DE 12 52 885 B bereits Siegelvorrichtungen mit zumindest einer Siegeleinheit zu einer Erstellung einer Siegelnaht und mit zumindest einer Heizeinheit zu einer Erhitzung der Siegeleinheit bekannt.

### Offenbarung der Erfindung

Die Erfindung geht aus von einer Siegelvorrichtung, insbesondere von einer Siegelbacke, mit zumindest einer, insbesondere wechselbaren, Siegeleinheit zu einer Erstellung einer Siegelnaht, mit zumindest einer Heizeinheit zu einer Erhitzung der Siegeleinheit, mit zumindest einem Lagerelement, das dazu vorgesehen ist, die zumindest eine Heizeinheit beweglich zu lagern, und mit zumindest einer Entkopplungseinheit, die dazu vorgesehen ist, die zumindest eine Heizeinheit von zumindest einer auf die Siegeleinheit wirkenden Prozesskraft und/oder Verbindungskraft zumindest teilweise zu entkoppeln.

Es wird vorgeschlagen, dass das zumindest eine Lagerelement dazu vorgesehen ist, die zumindest eine Heizeinheit mit einer Anpresskraft gegen die Siegeleinheit zu beaufschlagen.

Vorzugsweise umfasst eine Verpackungsmaschine, insbesondere eine Schlauchbeutelmaschine, die Siegelvorrichtung. Insbesondere ist die Siegelvorrichtung dazu vorgesehen, zu einer Erstellung einer Siegelnaht, insbesondere einer Verpackungsfolie, mit einer weiteren, insbesondere analog zu der Siegelvorrichtung ausgebildeten, Siegelvorrichtung zusammenzuwirken. Die Verpackungsmaschine kann insbesondere eine Mehrzahl von Siegelvorrichtungen aufweisen. Vorzugsweise weist die Verpackungsmaschine die Siegelvorrichtungen paarweise auf. Die Siegelvorrichtung, insbesondere die Siegeleinheit, ist vorzugsweise dazu vorgesehen, eine Siegelnaht, insbesondere eine Längssiegelnaht und/oder eine Quersiegelnaht, einer Verpackung zu erstellen, insbesondere eine Verpackungsfolie zu versiegeln. Alternativ oder zusätzlich kann die Siegelvorrichtung, insbesondere die Siegeleinheit der Siegelvorrichtung, als Vorheizung dienen. Insbesondere ist die Siegelvorrichtung, insbesondere die Siegeleinheit, dazu vorgesehen, eine Siegelnaht durch einen Wärmeübertrag auf eine und/oder eine mechanische Pressung einer Verpackungsfolie zu erstellen. Insbesondere sind jeweils zumindest zwei Siegelvorrichtungen derart relativ zueinander beweglich, insbesondere verfahrbar, angeordnet, dass eine Verpackungsfolie zwischen den Siegeleinheiten der Siegelvorrichtungen zusammenpressbar ist. Insbesondere können die Siegeleinheiten der Siegelvorrichtungen miteinander korrespondierende, insbesondere profilierte, Siegelflächen aufweisen, die miteinander in Eingriff bringbar sind. Vorzugsweise ist die Siegeleinheit als ein Siegelprofil ausgebildet. Unter "vorgesehen" soll insbesondere speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt.

Die Siegeleinheit ist, insbesondere zu einer Realisierung eines Wärmeübertrags auf eine Verpackungsfolie, aus einem wärmeleitfähigen Material, insbesondere aus einem Metall und/oder einer Metalllegierung, ausgebildet. Vorzugsweise ist die Heizeinheit dazu vorgesehen, die Siegeleinheit aufzuheizen. Insbesondere steht die Heizeinheit, insbesondere zumindest ein Heizelement, in, insbesondere flächigem, Kontakt mit der Siegeleinheit. Vorzugsweise ist die Heizeinheit auf einer der während eines Siegelvorgangs mit einer Verpackungsfolie in Kontakt stehenden Siegelfläche der Siegeleinheit abgewandten Seite der Siegeleinheit angeordnet. Vorzugsweise weist die Heizeinheit zumindest ein, insbesondere flächiges, Heizelement auf. Das Heizelement kann insbesondere als eine Heizplatte, als ein flachgedrückter elektrischer Widerstand, als ein Dickschichtheizelement, als ein pixelweise gedrucktes Heizelement, als ein, insbesondere flächig gelegter, Heizdraht, als ein Peltier-Element oder als ein anderes, einem Fachmann als sinnvoll erscheinendes Heizelement ausgebildet sein. Vorzugsweise ist die Heizeinheit dazu vorgesehen, die Siegeleinheit in Abhängigkeit von einer Art einer zu erstellenden Siegelnaht, einer Art einer zu siegelenden Verpackungsfolie, einer Art einer montierten Siegeleinheit und/oder in Abhängigkeit von weiteren, einem Fachmann als sinnvoll erscheinenden Kriterien auf eine benötigte Betriebstemperatur zu erhitzen. Vorzugsweise kann die Heizeinheit zumindest ein Sensorelement, beispielsweise ein Temperatursensorelement, ein Stromsensorelement, ein Spannungssensorelement o. dgl., umfassen, das dazu vorgesehen ist, eine Betriebstemperatur des zumindest einen Heizelements und/oder der Siegeleinheit zu erfassen. Insbesondere kann das zumindest eine Heizelement selbst als ein Sensorelement dienen. Vorzugsweise ist eine Steuer- und/oder Regeleinheit der Siegelvorrichtung und/oder der Verpackungsmaschine dazu vorgesehen, Signale des zumindest einen Sensorelements, insbesondere zu einer Überwachung eines Heizvorgangs, auszuwerten und in Abhängigkeit von der Auswertung die Heizeinheit zu steuern und/oder zu regeln. Bevorzugt ist die Steuer- und/oder Regeleinheit der Siegelvorrichtung und/oder der Verpackungsmaschine dazu vorgesehen, eine Widerstandsänderung bei steigender Temperatur des zumindest einen Heizelements auszuwerten. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Vorzugsweise ist die Siegeleinheit wechselbar ausgebildet, kann insbesondere gegen eine weitere, zumindest teilweise von der Siegeleinheit verschieden ausgebildete Siegeleinheit ausgetauscht werden. Insbesondere ist die Siegeleinheit unabhängig von der Heizeinheit wechselbar. Vorzugsweise ist die Heizeinheit mit unterschiedlichen Siegeleinheiten nutzbar. Insbesondere ist die Siegelvorrichtung für unterschiedliche Anwendungen, insbesondere für unterschiedliche zu erstellende Siegelnähte, mit unterschiedlichen Siegeleinheiten ausrüstbar. Die unterschiedlichen Siegeleinheiten können sich insbesondere in einer Geometrie, insbesondere in einer Ausgestaltung der Siegelfläche, in einer Materialzusammensetzung, in einer Materialdichte oder in weiteren, einem Fachmann als sinnvoll erscheinenden Parametern unterscheiden. Vorzugsweise umfasst die Siegelvorrichtung zumindest eine Spanneinheit zu einer Fixierung der Siegeleinheit, insbesondere an einem Grundkörper der Siegelvorrichtung. Vorzugsweise bildet der Grundkörper die Spanneinheit zumindest teilweise aus. Alternativ oder zusätzlich ist vorstellbar, dass die Siegelvorrichtung zumindest eine Schraubeinheit, zumindest eine Magneteinheit, zumindest eine Vakuumeinheit o. dgl. zu einer Fixierung der Siegeleinheit, insbesondere an dem Grundkörper der Siegelvorrichtung, aufweist.

Vorzugsweise ist das zumindest eine Lagerelement an dem Grundkörper und/oder an der Spanneinheit angeordnet. Alternativ ist vorstellbar, dass das zumindest eine Lagerelement an der Siegeleinheit angeordnet ist. Bevorzugt umfasst die Siegelvorrichtung eine Mehrzahl von Lagerelementen. Insbesondere ist jeweils zumindest ein Lagerelement zu einer beweglichen Lagerung jeweils eines Heizelements der Heizeinheit vorgesehen. Vorzugsweise sind die Lagerelemente dazu vorgesehen, die Heizeinheit, insbesondere die Heizelemente, entlang einer einzelnen Bewegungsrichtung beweglich zu lagern. Alternativ ist denkbar, dass die Lagerelemente dazu vorgesehen sind, die Heizeinheit, insbesondere die Heizelemente, entlang von einer Mehrzahl von Bewegungsrichtungen beweglich zu lagern. Vorzugsweise verläuft zumindest eine Bewegungsrichtung, entlang von der die Lagerelemente dazu vorgesehen sind, die Heizeinheit, insbesondere die Heizelemente, beweglich zu lagern, zumindest im Wesentlichen senkrecht zu der Siegelfläche der Siegeleinheit und/oder zu einer Haupterstreckungsrichtung der Siegeleinheit. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt.

Vorzugsweise üben die Lagerelemente in zumindest einem Betriebszustand eine in Richtung der Siegeleinheit gerichtete Kraft auf die Heizeinheit, insbesondere auf die Heizelemente, aus. Vorzugsweise sind die Lagerelemente dazu vorgesehen, die Heizeinheit, insbesondere die Heizelemente, mittelbar beweglich zu lagern, sind insbesondere frei von einem direkten Kontakt mit der Heizeinheit, insbesondere mit den Heizelementen, angeordnet. Alternativ ist denkbar, dass die Lagerelemente dazu vorgesehen sind, die Heizeinheit, insbesondere die Heizelemente, unmittelbar beweglich zu lagern, insbesondere dazu, in einem direkten Kontakt mit der Heizeinheit, insbesondere mit den Heizelementen, zu stehen. Die Lagerelemente können insbesondere als federelastische Elemente, als Magnetlagerelemente, als pneumatische Lagerelemente, als hydraulische Lagerelemente, als Motoren, insbesondere als Linearmotoren, oder als andere, einem Fachmann als sinnvoll erscheinende Lagerelemente ausgebildet sein.

Die Lagerelemente und/oder die Spanneinheit, insbesondere der Grundkörper der Siegelvorrichtung, bilden/bildet vorzugsweise die Entkopplungseinheit zumindest teilweise aus. Die Entkopplungseinheit ist vorzugsweise dazu vorgesehen, die Heizeinheit, insbesondere die Heizelemente, von zumindest einer auf die Siegeleinheit, insbesondere auf die Siegelfläche, wirkenden Prozesskraft und/oder Verbindungskraft zumindest teilweise, bevorzugt vollständig, zu entkoppeln, insbesondere mechanisch zu entkoppeln. Unter einer "Prozesskraft" soll insbesondere eine durch einen Siegelprozess erzeugte, insbesondere auf die Siegeleinheit wirkende, Kraft verstanden werden. Insbesondere kann die Prozesskraft zumindest teilweise von einer weiteren, zu einer Erstellung einer Siegelnaht mit der Siegelvorrichtung zusammenwirkenden, Siegelvorrichtung auf die Siegeleinheit ausgeübt werden. Vorzugsweise wirkt die Prozesskraft zumindest im Wesentlichen senkrecht zu der Siegelfläche auf die Siegeleinheit. Unter einer "Verbindungskraft" soll insbesondere eine durch eine Fixierung der Siegeleinheit erzeugte, insbesondere auf die Siegeleinheit wirkende, Kraft verstanden werden. Vorzugsweise kann die Verbindungskraft zumindest teilweise von der Spanneinheit auf die Siegeleinheit ausgeübt werden. Vorzugsweise wirkt die Verbindungskraft zumindest im Wesentlichen parallel und/oder quer zu der Siegelfläche auf die Siegeleinheit. Die Verbindungskraft wird insbesondere durch eine geometrische Kontur umgeleitet. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Insbesondere weist die Entkopplungseinheit, insbesondere der Grundkörper der Siegelvorrichtung, zumindest eine Anlagefläche, bevorzugt zumindest zwei Anlageflächen und besonders bevorzugt zumindest drei Anlageflächen auf, an der/denen die Siegeleinheit in einem montierten Zustand, insbesondere während eines Siegelprozesses, anliegt. Vorzugsweise ist die Entkopplungseinheit, insbesondere der Grundkörper der Siegelvorrichtung, insbesondere über die zumindest eine Anlagefläche, dazu vorgesehen, zumindest einen Teil der auf die Siegeleinheit wirkenden Prozesskraft und/oder Verbindungskraft aufzunehmen und von der Heizeinheit, insbesondere von den Heizelementen, wegzuleiten. Vorzugsweise sind die Lagerelemente dazu vorgesehen, in Abhängigkeit von einer auf die Siegeleinheit wirkenden Prozesskraft und/oder Verbindungskraft eine Bewegung der Heizeinheit, insbesondere der Heizelemente, zu einer Entkopplung von der Prozesskraft und/oder der Verbindungskraft zu ermöglichen.

Durch die erfindungsgemäße Ausgestaltung der Siegelvorrichtung kann eine auf eine Heizeinheit wirkende Prozesskraft und/oder Verbindungskraft minimiert werden. Vorteilhaft kann eine unabhängig von der Heizeinheit wechselbare Siegeleinheit bereitgestellt werden. Vorteilhaft kann unabhängig von einer verwendeten Siegeleinheit und/oder unabhängig von einer auf die Siegeleinheit wirkenden Prozesskraft und/oder Verbindungskraft eine effiziente Wärmeübertragung auf die Siegeleinheit ermöglicht werden. Es kann eine Siegelvorrichtung mit einem vorteilhaft schnellen und dynamischen Heizverhalten bereitgestellt werden.

Es kann eine vorteilhaft nutzerkomfortabel bedienbare und wartungsarme Siegelvorrichtung bereitgestellt werden.

Des Weiteren wird vorgeschlagen, dass die Entkopplungseinheit das zumindest eine Lagerelement umfasst, das dazu vorgesehen ist, die zumindest eine Heizeinheit von der zumindest einen auf die Siegeleinheit wirkenden Prozesskraft und/oder Verbindungskraft zumindest teilweise zu entkoppeln. Vorzugsweise sind die, insbesondere als federelastische Elemente ausgebildeten, Lagerelemente zu einer Entkopplung der Heizeinheit, insbesondere der Heizelemente, von der auf die Siegeleinheit wirkenden Prozesskraft und/oder Verbindungskraft dazu vorgesehen, der Prozesskraft und/oder der Verbindungskraft, insbesondere passiv, nachzugeben, insbesondere bis die Prozesskraft und/oder die Verbindungskraft von dem Grundkörper der Siegelvorrichtung aufgenommen werden/wird. Insbesondere kann die Siegeleinheit in einem ersten Betriebszustand, insbesondere während eines Siegelprozesses, eine andere Position aufweisen als in einem zweiten Betriebszustand, insbesondere außerhalb eines Siegelprozesses. Insbesondere können die Lagerelemente dazu vorgesehen sein, abhängig von unterschiedlichen Positionen der Siegeleinheit unterschiedliche Positionen der Heizeinheit, insbesondere der Heizelemente, insbesondere proportional zu einer Position der Siegeleinheit, zu ermöglichen. Insbesondere ist ein Entkopplungsgrad durch die, insbesondere als federelastische Elemente ausgebildeten, Lagerelemente abhängig von einer Elastizitätskenngröße, insbesondere von einer Federkonstante, und/oder von einem Federweg der Lagerelemente. Insbesondere können die, insbesondere als federelastische Elemente ausgebildeten, Lagerelemente in Abhängigkeit von einer typischen auf die Siegeleinheit wirkenden Prozesskraft und/oder Verbindungskraft ausgewählt oder eingestellt werden. Alternativ oder zusätzlich ist denkbar, dass die Siegelvorrichtung zumindest ein, insbesondere an der Heizeinheit, an der Siegeleinheit und/oder an zumindest einem Lagerelement angeordnetes, Drucksensorelement aufweist, das dazu vorgesehen ist, eine auf die Heizeinheit, insbesondere auf die Heizelemente, wirkende Kraft zu erfassen. Insbesondere kann die Steuer- und/oder Regeleinheit der Siegelvorrichtung und/oder der Verpackungsmaschine dazu vorgesehen sein, Signale des zumindest einen Drucksensorelements auszuwerten und in Abhängigkeit von der Auswertung die, insbesondere als Motoren ausgebildeten, Lagerelemente zu einer Positionsänderung der Heizeinheit, insbesondere der Heizelemente, anzusteuern. Vorteilhaft kann eine kraftabhängige Entkopplung der Heizeinheit von der Prozesskraft und/oder der Verbindungskraft ermöglicht werden. Vorteilhaft können/kann eine Wechselzeit und ein Verschleiß der Heizeinheit gering gehalten werden.

Insbesondere sind die Lagerelemente dazu vorgesehen, die Heizeinheit, insbesondere die Heizelemente, mit einer konstanten Anpresskraft gegen die Siegeleinheit zu beaufschlagen, insbesondere während und/oder außerhalb eines Siegelprozesses. Vorzugsweise sind die Lagerelemente dazu vorgesehen, mittels einer Kraftbeaufschlagung der Heizeinheit, insbesondere der Heizelemente, einen flächigen Kontakt zwischen der Heizeinheit, insbesondere zwischen den Heizelementen, und der Siegeleinheit herzustellen. Insbesondere ist/sind die Heizeinheit, insbesondere die Heizelemente, die mit der Siegeleinheit in Kontakt steht/stehen, dazu vorgesehen, an einer Kontaktfläche mit der Siegeleinheit Wärme auf die Siegeleinheit zu übertragen. Vorzugsweise ist eine benötigte Anpresskraft durch eine Positionierung der Lagerelemente relativ zu der Siegeleinheit und zu der Heizeinheit, durch eine Wahl einer Elastizitätskenngröße der Lagerelemente, durch Wahl einer Anzahl und/oder Art von Lagerelementen, durch eine Kompressionsstrecke der Lagerelemente und/oder durch weitere, einem Fachmann als sinnvoll erscheinende Parameter einstellbar. Alternativ oder zusätzlich ist vorstellbar, dass eine Anpresskraft der Lagerelemente mechanisch, elektrisch, motorisch, magnetisch, pneumatisch und/oder hydraulisch, insbesondere automatisch, einstellbar ist. Bevorzugt sind die Lagerelemente dazu vorgesehen, eine Anpresskraft entlang einer Kraftwirkrichtung, die zumindest im Wesentlichen senkrecht zu der Siegelfläche der Siegeleinheit verläuft, auf die Heizeinheit, insbesondere auf die Heizelemente, auszuüben. Insbesondere sind die Lagerelemente dazu vorgesehen, die Heizeinheit, insbesondere die Heizelemente, gegen eine zumindest im Wesentlichen parallel zu der Siegelfläche verlaufende Kontaktfläche der Siegeleinheit zu pressen. Vorzugsweise ist die Kontaktfläche der Siegelfläche abgewandt. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Vorteilhaft kann eine effiziente und konstante Wärmeübertragung auf die Siegeleinheit ermöglicht werden. Vorteilhaft kann ein dynamisches Heizverhalten der Siegeleinheit ermöglicht werden.

Weiterhin wird vorgeschlagen, dass das zumindest eine Lagerelement als ein federelastisches Element ausgebildet ist. Unter einem "federelastischen Element" soll insbesondere ein Element verstanden werden, dass durch auf das Element wirkende Kräfte relativ zu einer Ausgangsform verformbar ist, wobei das Element in einem belastungsfreien Zustand, insbesondere eigenständig, in die Ausgangsform zurückkehrt. Insbesondere ist das federelastische Element wiederholt verformbar, ohne dass durch eine mehrfache Verformung das federelastische Element mechanisch beschädigt oder zerstört wird. Vorzugsweise sind die als federelastische Elemente ausgebildeten Lagerelemente dazu vorgesehen, die Anpresskraft auf die Heizeinheit, insbesondere auf die Heizelemente, durch eine, insbesondere eigenständige, Rückkehr, insbesondere Ausdehnung, in ihre Ausgangsform auszuüben. Die als federelastische Elemente ausgebildeten Lagerelemente können insbesondere als Gummielemente, insbesondere als O-Ringe, als Gummibänder, als Gummimatten, als Gummibolzen o. dgl., als Federn, insbesondere als Druckfedern, beispielsweise als Spiralfedern, oder als andere, einem Fachmann als sinnvoll erscheinende federelastische Elemente ausgebildet sein. Vorteilhaft kann eine konstruktiv effiziente und wartungsarme bewegliche Lagerung der Heizeinheit, insbesondere der Heizelemente, ermöglicht werden.

Zudem wird vorgeschlagen, dass die Siegelvorrichtung zumindest ein Zwischenlagerelement umfasst, wobei das zumindest eine Lagerelement dazu vorgesehen ist, die zumindest eine Heizeinheit mittelbar über das zumindest eine Zwischenlagerelement beweglich zu lagern. Vorzugsweise umfasst die Siegelvorrichtung eine Mehrzahl von Zwischenlagerelementen, insbesondere eine Anzahl von Zwischenlagerelementen entsprechend einer Anzahl von Heizelementen der Heizeinheit. Bevorzugt ist jeweils einem Heizelement jeweils ein Zwischenlagerelement zugeordnet. Insbesondere ist jeweils ein Heizelement an jeweils einem Zwischenlagerelement angeordnet, insbesondere befestigt. Insbesondere ist jeweils einem Zwischenlagerelement jeweils zumindest ein Lagerelement zugeordnet. Insbesondere ist das Zwischenlagerelement an dem Lagerelement angeordnet, insbesondere gelagert. Insbesondere ist das Lagerelement an einer Seite des Zwischenlagerelements angeordnet, die einer weiteren Seite des Zwischenlagerelements, an der das Heizelement angeordnet ist, abgewandt ist. Vorzugsweise sind die Zwischenlagerelemente dazu vorgesehen, die Lagerelemente mechanisch, insbesondere kraftübertragungstechnisch, mit den Heizelementen zu koppeln. Vorzugsweise sind die Zwischenlagerelemente starr ausgebildet. Vorteilhaft kann eine effiziente Kopplung zwischen den Lagerelementen und der Heizeinheit, insbesondere den Heizelementen, ermöglicht werden.

Des Weiteren wird vorgeschlagen, dass das zumindest eine Zwischenlagerelement wenigstens zu einem Großteil aus einem thermisch isolierenden Material ausgebildet ist. Vorzugsweise sind die Zwischenlagerelemente zumindest teilweise aus einem Dämmmaterial, aus einem Stein, aus einer Keramik, aus einem wärmeleitschwachen Metall, beispielsweise aus einer austenitischen Stahllegierung, aus einem thermisch stabilen und isolierenden Kunststoff oder aus einem anderen, einem Fachmann als sinnvoll erscheinenden thermisch isolierenden Material ausgebildet. Vorzugsweise sind die Zwischenlagerelemente dazu vorgesehen, eine Wärmeübertragung von der Heizeinheit, insbesondere von den Heizelementen, auf die Entkopplungseinheit, insbesondere auf die Lagerelemente, zu begrenzen, insbesondere zu verhindern. Insbesondere sind die Zwischenlagerelemente dazu vorgesehen, eine Energieleitung, insbesondere eine Wärmeleitung, von der Heizeinheit, insbesondere von den Heizelementen, weg von dem Grundkörper, insbesondere zu der Siegelfläche, zu begünstigen. Vorzugsweise weisen die Zwischenlagerelemente eine thermische Isolationsfähigkeit und/oder zumindest eine minimale Erstreckung auf, so dass eine Temperatur der Lagerelemente unabhängig ist von einer Betriebstemperatur der Heizeinheit, insbesondere der Heizelemente. Vorteilhaft kann ein wärmebedingter Verschleiß der Heizeinheit, insbesondere der Heizelemente, gering gehalten werden und eine verschleißarme Siegelvorrichtung bereitgestellt werden.

Ferner wird vorgeschlagen, dass das zumindest eine Zwischenlagerelement dazu vorgesehen ist, die zumindest eine Heizeinheit elektrisch zu kontaktieren und/oder dass das zumindest eine Zwischenlagerelement zumindest eine Führung zur Aufnahme von zumindest einem elektrischen Kontaktelement aufweist, das zu einer elektrischen Kontaktierung der zumindest einen Heizeinheit vorgesehen ist. Insbesondere sind die Zwischenlagerelemente und/oder die elektrischen Kontaktelemente dazu vorgesehen, die Heizeinheit, insbesondere die Heizelemente, mit elektrischer Energie und/oder Leistung, insbesondere mit elektrischem Strom, zu versorgen. Die elektrischen Kontaktelemente können insbesondere als Kabel, insbesondere als Flachbandkabel, als Drähte, als Flachbänder oder als andere, einem Fachmann als sinnvoll erscheinende elektrische Kontaktelemente ausgebildet sein. Vorzugsweise umfasst die Siegelvorrichtung zumindest eine Anzahl von elektrischen Kontaktelementen entsprechend einer Anzahl von Heizelementen der Heizeinheit. Insbesondere ist jeweils einem Heizelement jeweils zumindest ein elektrisches Kontaktelement zugeordnet. Insbesondere ist das zumindest eine elektrische Kontaktelement elektrisch mit dem Heizelement verbunden, insbesondere verlötet, mit einem Steckverbinder, mit einem Schraubverbinder o. dgl., und dazu vorgesehen, das Heizelement mit elektrischer Energie und/oder Leistung zu versorgen. Vorzugsweise sind die elektrischen Kontaktelemente elektrisch mit zumindest einer Energieversorgungseinheit der Siegelvorrichtung, beispielsweise einem Netzanschluss, einem Akkumulator, einem Speicherkondensator o. dgl., verbunden. Eine Führung eines Zwischenlagerelements zur Aufnahme von zumindest einem elektrischen Kontaktelement kann insbesondere als ein Kanal innerhalb von dem Zwischenlagerelement, als eine Nut in einer Außenfläche des Zwischenlagerelements, als zumindest ein an dem Zwischenlagerelement angeordnetes Klemmelement oder als eine andere, einem Fachmann als sinnvoll erscheinende Führung ausgebildet sein. Alternativ oder zusätzlich ist denkbar, dass die Zwischenlagerelemente selbst als elektrische Kontaktelemente ausgebildet sind und jeweils zumindest einen elektrischen Kontaktpunkt, beispielsweise eine Lötstelle, mit jeweils einem Heizelement aufweisen. Insbesondere können die Zwischenlagerelemente zu einer Versorgung mit elektrischer Energie auf einer Seite, an der die Lagerelemente angeordnet sind, von elektrischen Kontaktelementen der Siegelvorrichtung kontaktiert sein. Vorteilhaft können die Zwischenlagerelemente eine Zusatzfunktion erfüllen und eine bauraumeffiziente Energieversorgung der Heizeinheit, insbesondere der Heizelemente, ermöglicht werden.

Weiterhin wird vorgeschlagen, dass das zumindest eine Lagerelement als ein O-Ring ausgebildet ist. Vorzugsweise ist die von den als O-Ringen ausgebildeten Lagerelementen auf die Heizeinheit, insbesondere auf die Heizelemente, ausgeübte Anpresskraft durch eine Wahl eines Durchmesser der O-Ringe, durch eine Wahl einer Materialzusammensetzung der O-Ringe, durch eine Wahl einer Querschnittsstärke der O-Ringe, durch eine Wahl einer Kompression der O-Ringe und/oder durch eine Wahl einer weiteren, einem Fachmann als sinnvoll erscheinenden Kenngröße der O-Ringe einstellbar. Vorzugsweise sind die als O-Ringe ausgebildeten Lagerelemente derart angeordnet, insbesondere an dem Grundkörper der Siegelvorrichtung befestigt, dass Ringmittelachsen der Lagerelemente sich zumindest im Wesentlichen senkrecht zu der Siegelfläche der Siegeleinheit und insbesondere zumindest im Wesentlichen parallel zu einer Kraftwirkrichtung der auf die Heizeinheit, insbesondere auf die Heizelemente, wirkenden Anpresskraft erstrecken. Vorzugsweise weisen die als O-Ringe ausgebildeten Lagerelemente in einem Betriebszustand frei von einer auf die Siegeleinheit wirkenden Prozesskraft und/oder Verbindungskraft einen kreisförmigen Querschnitt auf. Vorzugsweise weisen die als O-Ringe ausgebildeten Lagerelemente in einem Betriebszustand, in dem eine Prozesskraft und/oder eine Verbindungskraft auf die Siegeleinheit wirkt, eine gegenüber einem kreisförmigen Querschnitt in einer Ausgangsform gestauchte Form, insbesondere einen ellipsenförmigen Querschnitt, auf. Vorteilhaft kann eine kostengünstige und langlebige Möglichkeit der beweglichen Lagerung der Heizeinheit, insbesondere der Heizelemente, bereitgestellt werden.

Zudem wird vorgeschlagen, dass die zumindest eine Heizeinheit zumindest teilweise von einzelnen plattenförmig angeordneten und/oder ausgebildeten Heizelementen ausgebildet ist. Vorzugsweise sind die Heizelemente als Heizplatten ausgebildet. Alternativ ist vorstellbar, dass die Heizelemente als Dickschichtheizelemente, als pixelweise gedruckte Heizelemente, als Peltier-Elemente oder als andere, einem Fachmann als sinnvoll erscheinende Heizelemente ausgebildet sind. Vorzugsweise weist die Heizeinheit zumindest zwei zumindest im Wesentlichen senkrecht zu der Haupterstreckungsrichtung der Siegeleinheit und zumindest im Wesentlichen parallel zu der Siegelfläche der Siegeleinheit voneinander beabstandete Reihen von Heizelementen auf, die sich insbesondere zumindest im Wesentlichen parallel zu der Haupterstreckungsrichtung der Siegeleinheit erstrecken. Alternativ ist vorstellbar, dass die Heizeinheit eine einzelne Reihe von Heizelementen aufweist, die sich zumindest im Wesentlichen parallel zu der Haupterstreckungsrichtung der Siegeleinheit erstreckt. Vorzugsweise sind die Heizelemente innerhalb einer Reihe entlang der Haupterstreckungsrichtung der Siegeleinheit betrachtet äquidistant zueinander angeordnet. Vorteilhaft kann eine gleichmäßige Erhitzung der Siegeleinheit ermöglicht werden. Vorteilhaft können präzise Siegelnähte erstellt werden.

Des Weiteren wird vorgeschlagen, dass die zumindest eine Heizeinheit, insbesondere zumindest ein Heizelement der Heizeinheit, zumindest eine, insbesondere spezifische, Kontur aufweist. Insbesondere können die Heizelemente auf einer mit der Siegeleinheit, insbesondere mit der Kontaktfläche der Siegeleinheit, in Kontakt stehenden Seite die Kontur aufweisen. Vorzugsweise kann die Kontur in die, insbesondere als Heizplatten ausgebildeten, Heizelemente geätzt, gelasert, gestanzt, gefräst, gebogen, gepresst oder auf eine andere, einem Fachmann als sinnvoll erscheinende Bearbeitungsart eingebracht sein. Vorzugsweise können die, insbesondere als pixelweise gedruckte Heizelemente ausgebildeten, Heizelemente eine Kontur aufweisen. Vorzugsweise ist die Kontur der Heizelemente korrespondierend zu einer Kontur der Kontaktfläche der Siegeleinheit ausgebildet, insbesondere dazu vorgesehen, mit der Kontur der Kontaktfläche der Siegeleinheit zusammenzuwirken. Vorzugsweise sind die Lagerelemente dazu vorgesehen, die Heizelemente derart mit einer Anpresskraft gegen die Siegeleinheit zu beaufschlagen, dass die Kontur der Heizelemente mit der Kontur der Kontaktfläche der Siegeleinheit in Eingriff steht. Insbesondere ist denkbar, dass abhängig von unterschiedlichen Konturen der Heizelemente unterschiedliche Anpresskräfte einstellbar sind. Vorteilhaft kann eine besonders effiziente und gleichmäßige Wärmeübertragung von den Heizelementen auf die Siegeleinheit ermöglicht werden.

Ferner wird vorgeschlagen, dass die Siegelvorrichtung zumindest eine, insbesondere schwalbenschwanzartige, Spanneinheit, insbesondere die vorgenannte Spanneinheit, umfasst, die dazu vorgesehen ist, die zumindest eine Siegeleinheit zu fixieren und die zumindest eine auf die Siegeleinheit wirkende Prozesskraft zumindest teilweise aufzunehmen. Die Spanneinheit umfasst insbesondere den, insbesondere feststehenden, Grundkörper der Siegelvorrichtung und zumindest ein, insbesondere relativ zu dem Grundkörper beweglich gelagertes, Spannelement. Insbesondere kann die Spanneinheit eine Mehrzahl von Spannelementen aufweisen, die insbesondere zumindest im Wesentlichen parallel zu der Haupterstreckungsrichtung der Siegeleinheit betrachtet beabstandet zueinander angeordnet sind. Vorzugsweise bilden der Grundkörper, insbesondere ein Spannfortsatz des Grundkörpers, und das zumindest eine Spannelement eine Befestigungsnut, in der die Siegeleinheit festspannbar ist. Vorzugsweise ist das zumindest eine Spannelement zumindest im Wesentlichen senkrecht zu der Haupterstreckungsrichtung der Siegeleinheit und insbesondere zumindest im Wesentlichen parallel zu der Siegelfläche der Siegeleinheit beweglich an dem Grundkörper gelagert. Vorzugsweise umfasst die Spanneinheit zumindest ein mit dem zumindest einen Spannelement wirkverbundenes Spannbetätigungselement. Insbesondere ist das zumindest eine Spannelement in Abhängigkeit von einer Betätigung des zumindest einen Spannbetätigungselements bewegbar, insbesondere verschiebbar. Das zumindest eine Spannbetätigungselement kann insbesondere als eine Spannschraube, als ein, insbesondere kegeliger, Exzenter, als ein Linearmotor oder als ein anderes, einem Fachmann als sinnvoll erscheinendes Spannbetätigungselement ausgebildet sein.

Insbesondere ist die Siegeleinheit durch eine Bewegung des zumindest einen Spannelements in Richtung des Spannfortsatzes des Grundkörpers zwischen dem zumindest einen Spannelement und dem Spannfortsatz des Grundkörpers festspannbar. Insbesondere ist die Siegeleinheit in einem festgespannten Zustand, insbesondere schwalbenschwanzartik, formschlüssig zwischen dem zumindest einen Spannelement und dem Spannfortsatz des Grundkörpers fixiert. Insbesondere bildet die Siegeleinheit zumindest im Wesentlichen einen Spund einer Schwalbenschwanzverbindung mit der Spanneinheit aus, wobei insbesondere das zumindest eine Spannelement und der Spannfortsatz des Grundkörpers an Schrägflächen der Siegeleinheit anliegen. Vorzugsweise ist die Siegeleinheit durch eine Bewegung des zumindest einen Spannelements von dem Spannfortsatz des Grundkörpers weg freigebbar, insbesondere zu einem Wechsel der Siegeleinheit. Vorzugsweise ist die Spanneinheit, insbesondere der Grundkörper, dazu vorgesehen, zumindest an der zumindest einen Anlagefläche des Grundkörpers die auf die Siegeleinheit wirkende Prozesskraft und Spannkräfte zumindest teilweise aufzunehmen. Alternativ zu einer Ausbildung mit der Spanneinheit ist vorstellbar, dass die Siegeleinheit direkt mit dem Grundkörper verbindbar, insbesondere verschraubbar, ist. Vorteilhaft kann eine sichere Fixierung der Siegeleinheit und ein nutzerkomfortabler Wechsel der Siegeleinheit ermöglicht werden.

Weiterhin geht die Erfindung aus von einer Verpackungsmaschine, insbesondere von einer Schlauchbeutelmaschine, mit zumindest einer erfindungsgemäßen Siegelvorrichtung. Bevorzugt ist die Verpackungsmaschine als eine vertikale Schlauchbeutelmaschine ausgebildet. Alternativ ist denkbar, dass die Verpackungsmaschine als eine horizontale Schlauchbeutelmaschine ausgebildet ist. Insbesondere ist vorstellbar, dass die Siegelvorrichtung zumindest teilweise eine Querheizung und/oder eine Vorheizung einer horizontalen Schlauchbeutelmaschine ausbildet. Insbesondere umfasst die Verpackungsmaschine zumindest zwei Siegelvorrichtungen, insbesondere zumindest ein Paar von Siegelvorrichtungen. Vorzugsweise kann die Verpackungsmaschine zusätzlich zu der zumindest einen Siegelvorrichtung, insbesondere zumindest zusätzlich zu der Mehrzahl von Siegelvorrichtungen, weitere, einem Fachmann bekannte Komponenten, beispielsweise eine Transporteinheit zu einem Transport einer zu siegelnden Verpackungsfolie, eine Zuführeinheit zu einer Zuführung von zu verpackenden Produkten, eine Sortiereinheit zu einem Sortieren von fertigen Verpackungen o. dgl., aufweisen. Es kann eine vorteilhaft nutzerkomfortabel bedienbare und wartungsarme Verpackungsmaschine bereitgestellt werden.

Zudem geht die Erfindung aus von einem Verfahren zu einem Wechsel von zumindest einer Siegeleinheit zumindest einer erfindungsgemäßen Siegelvorrichtung, wobei zumindest eine Heizeinheit der Siegelvorrichtung wechselfrei verbleibt. Vorzugsweise wird zu einem Wechsel der Siegeleinheit das zumindest eine Spannelement von dem Spannfortsatz des Grundkörpers wegbewegt und insbesondere die Siegeleinheit aus der Spanneinheit entnommen. Anschließend kann eine andere Siegeleinheit in die Spanneinheit eingesetzt werden und durch eine Bewegung des zumindest einen Spannelements in Richtung des Spannfortsatzes des Grundkörpers festgespannt werden. Vorzugsweise wird/werden die Heizeinheit, insbesondere die Heizelemente, durch die Lagerelemente automatisch in Kontakt mit der anderen Siegeleinheit gebracht. Vorteilhaft kann ein Verfahren bereitgestellt werden, das einen zeiteffizienten und nutzerkomfortablen Wechsel einer Siegeleinheit ermöglicht.

Die erfindungsgemäße Siegelvorrichtung, die erfindungsgemäße Verpackungsmaschine und/oder das erfindungsgemäße Verfahren sollen/soll hierbei nicht auf die oben beschriebene Anwendung und Ausführungsform beschränkt sein. Insbesondere können/kann die erfindungsgemäße Siegelvorrichtung, die erfindungsgemäße Verpackungsmaschine und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teil einer erfindungsgemäßen Verpackungsmaschine in einer schematischen perspektivischen Darstellung,
- Fig. 2: eine Schnittansicht eines Teils einer erfindungsgemäßen Siegelvorrichtung der erfindungsgemäßen Verpackungsmaschine aus Fig. 1 in einer schematischen Darstellung,
- Fig. 3: ein Heizelement einer Heizeinheit der erfindungsgemäßen Siegelvorrichtung aus Fig. 2 in einer schematischen Darstellung und
- Fig. 4: eine Schnittansicht eines Teils einer alternativen erfindungsgemäßen Siegelvorrichtung in einer schematischen Darstellung.

### Beschreibung der Ausführungsbeispiele

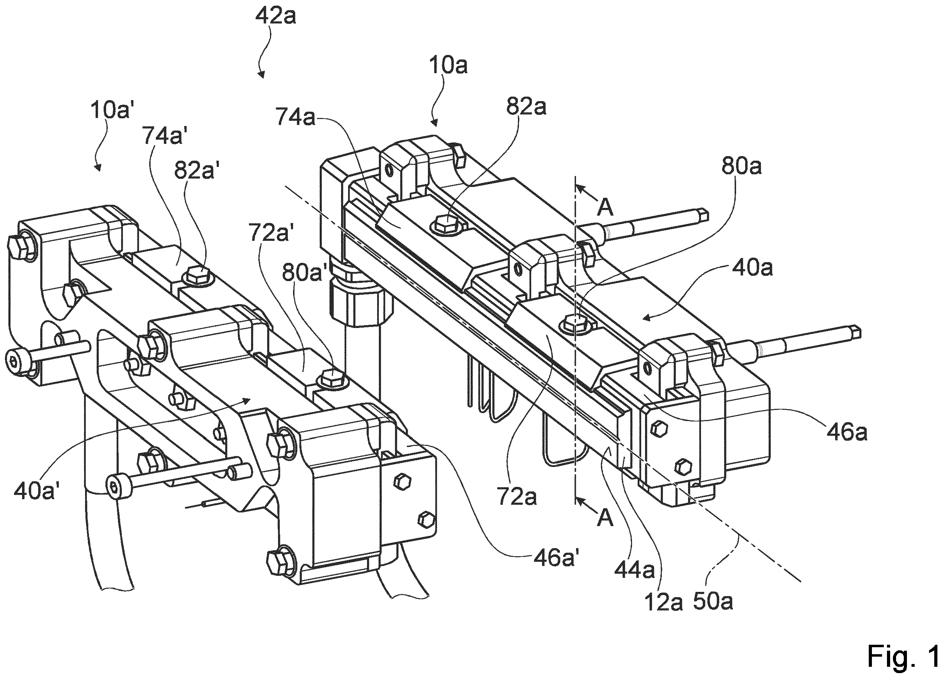

Figur 1 zeigt einen Teil einer Verpackungsmaschine 42a, insbesondere einer Schlauchbeutelmaschine, mit zumindest einer Siegelvorrichtung 10a, 10a' in einer schematischen Darstellung. Bevorzugt ist die Verpackungsmaschine 42a als eine vertikale Schlauchbeutelmaschine ausgebildet. Alternativ ist denkbar, dass die Verpackungsmaschine 42a als eine horizontale Schlauchbeutelmaschine ausgebildet ist. Insbesondere ist vorstellbar, dass die zumindest eine Siegelvorrichtung 10a zumindest teilweise eine Querheizung und/oder eine Vorheizung einer horizontalen Schlauchbeutelmaschine ausbildet. Insbesondere umfasst die Verpackungsmaschine 42a zumindest zwei Siegelvorrichtungen 10a, 10a', insbesondere zumindest ein Paar von Siegelvorrichtungen 10a, 10a'. In Figur 1 ist beispielhaft eine Siegelvorrichtung 10a und eine weitere Siegelvorrichtung 10a' dargestellt, die zusammen ein Paar von Siegelvorrichtungen 10a, 10a' bilden. Vorzugsweise kann die Verpackungsmaschine 42a zusätzlich zu den Siegelvorrichtungen 10a, 10a' weitere, einem Fachmann bekannte Komponenten, beispielsweise eine Transporteinheit zu einem Transport einer zu siegelnden Verpackungsfolie, eine Zuführeinheit zu einer Zuführung von zu verpackenden Produkten, eine Sortiereinheit zu einem Sortieren von fertigen Verpackungen o. dgl., aufweisen (hier nicht dargestellt).

Insbesondere ist die Siegelvorrichtung 10a dazu vorgesehen, zu einer Erstellung einer Siegelnaht, insbesondere einer Verpackungsfolie, mit der weiteren, insbesondere analog zu der Siegelvorrichtung 10a ausgebildeten, Siegelvorrichtung 10a' zusammenzuwirken. Vorzugsweise weist die Verpackungsmaschine 42a die Siegelvorrichtungen 10a, 10a' paarweise auf. Die Siegelvorrichtungen 10a, 10a', insbesondere Siegeleinheiten 12a der Siegelvorrichtungen 10a, 10a', sind vorzugsweise dazu vorgesehen, eine Siegelnaht, insbesondere eine Längssiegelnaht und/oder eine Quersiegelnaht, einer Verpackung zu erstellen, insbesondere eine Verpackungsfolie zu versiegeln. Alternativ oder zusätzlich können die Siegelvorrichtungen 10a, 10a', insbesondere die Siegeleinheiten 12a der Siegelvorrichtungen 10a, 10a', als Vorheizungen dienen. Insbesondere sind die Siegelvorrichtungen 10a, 10a', insbesondere die Siegeleinheiten 12a, dazu vorgesehen, eine Siegelnaht durch einen Wärmeübertrag auf eine und/oder eine mechanische Pressung einer Verpackungsfolie zu erstellen. Insbesondere sind jeweils zumindest zwei Siegelvorrichtungen, im vorliegenden Ausführungsbeispiel beispielhaft die Siegelvorrichtung 10a und die weitere Siegelvorrichtung 10a', derart relativ zueinander beweglich, insbesondere verfahrbar, angeordnet, dass eine Verpackungsfolie zwischen den Siegeleinheiten 12a der Siegelvorrichtungen 10a, 10a' zusammenpressbar ist. Insbesondere können die Siegeleinheiten 12a der Siegelvorrichtungen 10a, 10a' miteinander korrespondierende, insbesondere profilierte, Siegelflächen 44a aufweisen, die miteinander in Eingriff bringbar sind. Vorzugsweise sind die Siegeleinheiten 12a als Siegelprofile ausgebildet.

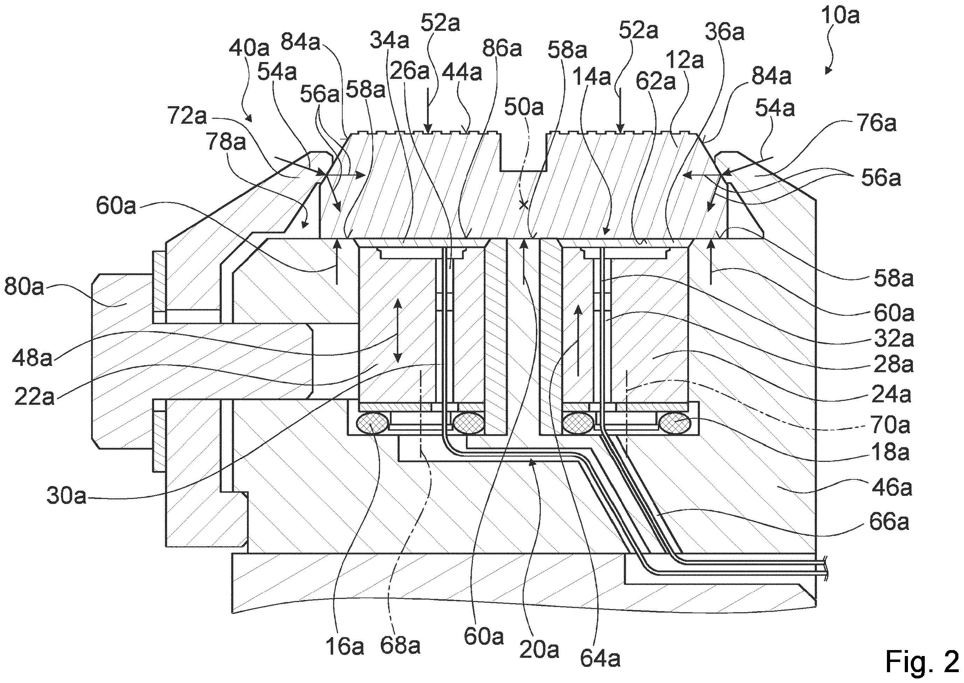

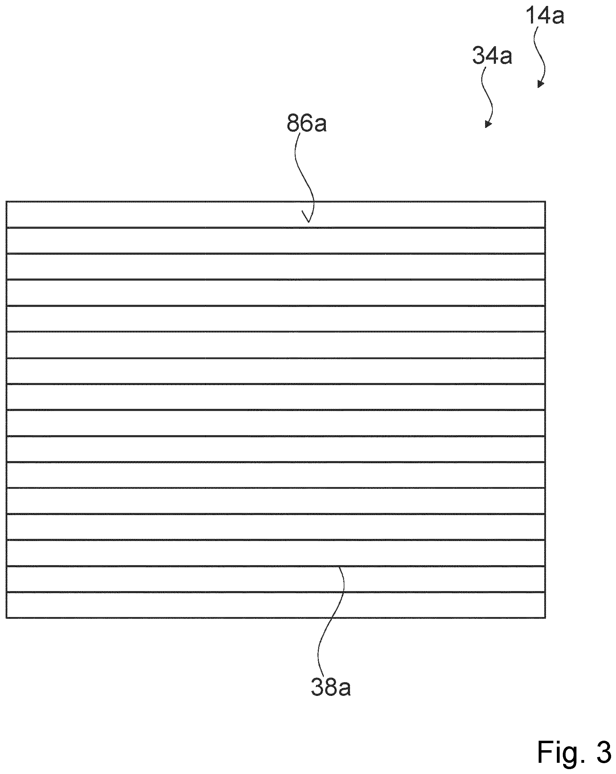

Figur 2 zeigt eine Schnittansicht entlang der in Figur 1 gekennzeichneten Linie A-A eines Teils der Siegelvorrichtung 10a der Verpackungsmaschine 42a aus Figur 1 in einer schematischen Darstellung. Die folgenden Beschreibungen und die Figuren 2 und 3 beschränken sich auf die Siegelvorrichtung 10a. Die Beschreibungen und die Figuren 2 und 3 gelten analog aber auch für die weitere Siegelvorrichtung 10a' der Verpackungsmaschine 42a, da die weitere Siegelvorrichtung 10a' analog zu der Siegelvorrichtung 10a ausgebildet ist. Vorzugsweise umfasst die Siegelvorrichtung 10a, insbesondere die Siegelbacke, zumindest eine, insbesondere wechselbare, Siegeleinheit, insbesondere die vorgenannte Siegeleinheit 12a, zu einer Erstellung einer Siegelnaht, zumindest eine Heizeinheit 14a zu einer Erhitzung der Siegeleinheit 12a und zumindest ein Lagerelement 16a, 18a, das dazu vorgesehen ist, die zumindest eine Heizeinheit 14a beweglich zu lagern. Bevorzugt umfasst die Siegelvorrichtung 10a zumindest eine Entkopplungseinheit 20a, die dazu vorgesehen ist, die zumindest eine Heizeinheit 14a von zumindest einer auf die Siegeleinheit 12a wirkenden Prozesskraft und/oder Verbindungskraft zumindest teilweise zu entkoppeln.

Die Siegeleinheit 12a ist, insbesondere zu einer Realisierung eines Wärmeübertrags auf eine Verpackungsfolie, aus einem wärmeleitfähigen Material, insbesondere aus einem Metall und/oder einer Metalllegierung, ausgebildet. Vorzugsweise ist die Heizeinheit 14a dazu vorgesehen, die Siegeleinheit 12a aufzuheizen. Insbesondere steht die Heizeinheit 14a, insbesondere zumindest ein Heizelement 34a, 36a, in, insbesondere flächigem, Kontakt mit der Siegeleinheit 12a. Vorzugsweise ist die Heizeinheit 14a auf einer der während eines Siegelvorgangs mit einer Verpackungsfolie in Kontakt stehenden Siegelfläche 44a der Siegeleinheit 12a abgewandten Seite der Siegeleinheit 12a angeordnet. Vorzugsweise weist die Heizeinheit 14a zumindest ein, insbesondere flächiges, Heizelement 34a, 36a auf. Im vorliegenden Ausführungsbeispiel weist die Heizeinheit 14a beispielhaft eine Mehrzahl von Heizelementen 34a, 36a auf, von denen in Figur 2 ein Heizelement 34a und ein weiteres Heizelement 36a dargestellt sind. Die Heizelemente 34a, 36a können insbesondere als Heizplatten, wie beispielhaft im vorliegenden Ausführungsbeispiel, als flachgedrückte elektrische Widerstände, als Dickschichtheizelemente, als pixelweise gedruckte Heizelemente, als, insbesondere flächig gelegte, Heizdrähte, als Peltier-Elemente oder als andere, einem Fachmann als sinnvoll erscheinende Heizelemente ausgebildet sein. Vorzugsweise ist die Heizeinheit 14a dazu vorgesehen, die Siegeleinheit 12a in Abhängigkeit von einer Art einer zu erstellenden Siegelnaht, einer Art einer zu siegelenden Verpackungsfolie, einer Art einer montierten Siegeleinheit 12a und/oder in Abhängigkeit von weiteren, einem Fachmann als sinnvoll erscheinenden Kriterien auf eine benötigte Betriebstemperatur zu erhitzen. Vorzugsweise kann die Heizeinheit 14a zumindest ein Sensorelement, beispielsweise ein Temperatursensorelement, ein Stromsensorelement, ein Spannungssensorelement o. dgl., umfassen, das dazu vorgesehen ist, eine Betriebstemperatur der Heizelemente 34a, 36a und/oder der Siegeleinheit 12a zu erfassen (hier nicht weiter dargestellt). Insbesondere können auch die Heizelemente 34a, 36a selbst als Sensorelemente dienen. Vorzugsweise ist eine Steuer- und/oder Regeleinheit der Siegelvorrichtung 10a und/oder der Verpackungsmaschine 42a dazu vorgesehen, Signale des zumindest einen Sensorelements, insbesondere zu einer Überwachung eines Heizvorgangs, auszuwerten und in Abhängigkeit von der Auswertung die Heizeinheit 14a zu steuern und/oder zu regeln (hier nicht dargestellt). Bevorzugt ist die Steuer- und/oder Regeleinheit der Siegelvorrichtung 10a und/oder der Verpackungsmaschine 42a dazu vorgesehen, eine Widerstandsänderung bei steigender Temperatur der Heizelemente 34a, 36a auszuwerten.

Vorzugsweise ist die Siegeleinheit 12a wechselbar ausgebildet, kann insbesondere gegen eine weitere, zumindest teilweise von der Siegeleinheit 12a verschieden ausgebildete Siegeleinheit ausgetauscht werden (hier nicht weiter dargestellt). Insbesondere ist die Siegeleinheit 12a unabhängig von der Heizeinheit 14a wechselbar. Vorzugsweise ist die Heizeinheit 14a mit unterschiedlichen Siegeleinheiten 12a nutzbar. Insbesondere ist die Siegelvorrichtung 10a für unterschiedliche Anwendungen, insbesondere für unterschiedliche zu erstellende Siegelnähte, mit unterschiedlichen Siegeleinheiten 12a ausrüstbar. Die unterschiedlichen Siegeleinheiten 12a können sich insbesondere in einer Geometrie, insbesondere in einer Ausgestaltung der Siegelfläche 44a, in einer Materialzusammensetzung, in einer Materialdichte oder in weiteren, einem Fachmann als sinnvoll erscheinenden Parametern unterscheiden. Vorzugsweise umfasst die Siegelvorrichtung 10a zumindest eine Spanneinheit 40a zu einer Fixierung der Siegeleinheit 12a, insbesondere an einem Grundkörper 46a der Siegelvorrichtung 10a. Vorzugsweise bildet der Grundkörper 46a die Spanneinheit 40a zumindest teilweise aus. Alternativ oder zusätzlich ist vorstellbar, dass die Siegelvorrichtung 10a zumindest eine Schraubeinheit, zumindest eine Magneteinheit, zumindest eine Vakuumeinheit o. dgl. zu einer Fixierung der Siegeleinheit 12a, insbesondere an dem Grundkörper 46a der Siegelvorrichtung 10a, aufweist.

Vorzugsweise ist das zumindest eine Lagerelement 16a, 18a an dem Grundkörper 46a und/oder an der Spanneinheit 40a angeordnet. Alternativ ist vorstellbar, dass das zumindest eine Lagerelement 16a, 18a an der Siegeleinheit 12a angeordnet ist. Bevorzugt umfasst die Siegelvorrichtung 10a eine Mehrzahl von Lagerelementen 16a, 18a. In Figur 2 sind beispielhaft zwei Lagerelemente 16a, 18a, insbesondere ein Lagerelement 16a und ein weiteres Lagerelement 18a, dargestellt. Insbesondere ist jeweils zumindest ein Lagerelement 16a, 18a zu einer beweglichen Lagerung jeweils eines Heizelements 34a, 36a der Heizeinheit 14a vorgesehen. Im vorliegenden Ausführungsbeispiel ist beispielsweise das Lagerelement 16a zu einer beweglichen Lagerung eines Heizelements 34a der Heizeinheit 14a und das weitere Lagerelement 18a zu einer beweglichen Lagerung eines weiteren Heizelements 36a der Heizeinheit 14a vorgesehen. Vorzugsweise sind die Lagerelemente 16a, 18a dazu vorgesehen, die Heizeinheit 14a, insbesondere die Heizelemente 34a, 36a, entlang einer einzelnen Bewegungsrichtung 48a beweglich zu lagern. Alternativ ist denkbar, dass die Lagerelemente 16a, 18a dazu vorgesehen sind, die Heizeinheit 14a, insbesondere die Heizelemente 34a, 36a, entlang von einer Mehrzahl von Bewegungsrichtungen 48a beweglich zu lagern. Vorzugsweise verläuft zumindest eine Bewegungsrichtung 48a, entlang von der die Lagerelemente 16a, 18a dazu vorgesehen sind, die Heizeinheit 14a, insbesondere die Heizelemente 34a, 36a, beweglich zu lagern, zumindest im Wesentlichen senkrecht zu der Siegelfläche 44a der Siegeleinheit 12a und/oder zu einer Haupterstreckungsrichtung 50a der Siegeleinheit 12a.

Vorzugsweise üben die Lagerelemente 16a, 18a in zumindest einem Betriebszustand eine in Richtung der Siegeleinheit 12a gerichtete Kraft auf die Heizeinheit 14a, insbesondere auf die Heizelemente 34a, 36a, aus. Vorzugsweise sind die Lagerelemente 16a, 18a dazu vorgesehen, die Heizeinheit 14a, insbesondere die Heizelemente 34a, 36a, mittelbar beweglich zu lagern, sind insbesondere frei von einem direkten Kontakt mit der Heizeinheit 14a, insbesondere mit den Heizelementen 34a, 36a, angeordnet. Alternativ ist denkbar, dass die Lagerelemente 16a, 18a dazu vorgesehen sind, die Heizeinheit 14a, insbesondere die Heizelemente 34a, 36a, unmittelbar beweglich zu lagern, insbesondere dazu, in einem direkten Kontakt mit der Heizeinheit 14a, insbesondere mit den Heizelementen 34a, 36a, zu stehen. Die Lagerelemente 16a, 18a können insbesondere als federelastische Elemente, wie beispielhaft im vorliegenden Ausführungsbeispiel, als Magnetlagerelemente, als pneumatische Lagerelemente, als hydraulische Lagerelemente, als Motoren, insbesondere als Linearmotoren, oder als andere, einem Fachmann als sinnvoll erscheinende Lagerelemente ausgebildet sein.

Die Lagerelemente 16a, 18a und/oder die Spanneinheit 40a, insbesondere der Grundkörper 46a der Siegelvorrichtung 10a, bilden/bildet vorzugsweise die Entkopplungseinheit 20a zumindest teilweise aus. Die Entkopplungseinheit 20a ist vorzugsweise dazu vorgesehen, die Heizeinheit 14a, insbesondere die Heizelemente 34a, 36a, von zumindest einer auf die Siegeleinheit 12a, insbesondere auf die Siegelfläche 44a, wirkenden Prozesskraft und/oder Verbindungskraft zumindest teilweise, bevorzugt vollständig, zu entkoppeln, insbesondere mechanisch zu entkoppeln. Vorzugsweise wirkt die Prozesskraft zumindest im Wesentlichen senkrecht zu der Siegelfläche 44a auf die Siegeleinheit 12a. Die Prozesskraft, insbesondere eine Wirkrichtung der Prozesskraft, ist in Figur 2 insbesondere mittels ersten Pfeilen 52a dargestellt. Vorzugsweise kann die Verbindungskraft zumindest teilweise von der Spanneinheit 40a auf die Siegeleinheit 12a ausgeübt werden. Vorzugsweise wirkt die Verbindungskraft zumindest im Wesentlichen parallel und/oder quer zu der Siegelfläche 44a auf die Siegeleinheit 12a. Die Verbindungskraft wird insbesondere durch eine geometrische Kontur umgeleitet. Die Verbindungskraft, insbesondere Wirkrichtungen der Verbindungskraft, ist/sind in Figur 2 insbesondere mittels zweiten Pfeilen 54a dargestellt. Einzelne Komponenten der Verbindungskraft sind in Figur 2 mittels dritten Pfeilen 56a dargestellt.

Insbesondere weist die Entkopplungseinheit 20a, insbesondere der Grundkörper 46a der Siegelvorrichtung 10a, zumindest eine Anlagefläche 58a, bevorzugt zumindest zwei Anlageflächen 58a und besonders bevorzugt zumindest drei Anlageflächen 58a, wie beispielhaft im vorliegenden Ausführungsbeispiel, auf, an der/denen die Siegeleinheit 12a in einem montierten Zustand, insbesondere während eines Siegelprozesses, anliegt. Vorzugsweise ist die Entkopplungseinheit 20a, insbesondere der Grundkörper 46a der Siegelvorrichtung 10a, insbesondere über die Anlageflächen 58a, dazu vorgesehen, zumindest einen Teil der auf die Siegeleinheit 12a wirkenden Prozesskraft und/oder Verbindungskraft aufzunehmen und von der Heizeinheit 14a, insbesondere von den Heizelementen 34a, 36a, wegzuleiten. Eine, insbesondere an den Anlageflächen 58a, von der Entkopplungseinheit 20a, insbesondere von dem Grundkörper 46a, der Prozesskraft und/oder der Verbindungskraft entgegengerichtete Kraft ist in Figur 2 insbesondere mit vierten Pfeilen 60a dargestellt. Vorzugsweise sind die Lagerelemente 16a, 18a dazu vorgesehen, in Abhängigkeit von einer auf die Siegeleinheit 12a wirkenden Prozesskraft und/oder Verbindungskraft eine Bewegung der Heizeinheit 14a, insbesondere der Heizelemente 34a, 36a, zu einer Entkopplung von der Prozesskraft und/oder der Verbindungskraft zu ermöglichen.

Bevorzugt umfasst die Entkopplungseinheit 20a das zumindest eine Lagerelement 16a, 18a, insbesondere die Lagerelemente 16a, 18a, das/die dazu vorgesehen ist/sind, die zumindest eine Heizeinheit 14a von der zumindest einen auf die Siegeleinheit 12a wirkenden Prozesskraft und/oder Verbindungskraft zumindest teilweise zu entkoppeln. Vorzugsweise sind die, insbesondere als federelastische Elemente ausgebildeten, Lagerelemente 16a, 18a zu einer Entkopplung der Heizeinheit 14a, insbesondere der Heizelemente 34a, 36a, von der auf die Siegeleinheit 12a wirkenden Prozesskraft und/oder Verbindungskraft dazu vorgesehen, der Prozesskraft und/oder der Verbindungskraft, insbesondere passiv, nachzugeben, insbesondere bis die Prozesskraft und/oder die Verbindungskraft von dem Grundkörper 46a der Siegelvorrichtung 10a aufgenommen werden/wird. Insbesondere kann die Siegeleinheit 12a in einem ersten Betriebszustand, insbesondere während eines Siegelprozesses, eine andere Position aufweisen als in einem zweiten Betriebszustand, insbesondere außerhalb eines Siegelprozesses. Insbesondere können die Lagerelemente 16a, 18a dazu vorgesehen sein, abhängig von unterschiedlichen Positionen der Siegeleinheit 12a unterschiedliche Positionen der Heizeinheit 14a, insbesondere der Heizelemente 34a, 36a, insbesondere proportional zu einer Position der Siegeleinheit 12a, zu ermöglichen. Insbesondere ist ein Entkopplungsgrad durch die, insbesondere als federelastische Elemente ausgebildeten, Lagerelemente 16a, 18a abhängig von einer Elastizitätskenngröße, insbesondere von einer Federkonstante, und/oder von einem Federweg der Lagerelemente 16a, 18a. Insbesondere können die, insbesondere als federelastische Elemente ausgebildeten, Lagerelemente 16a, 18a in Abhängigkeit von einer typischen auf die Siegeleinheit 12a wirkenden Prozesskraft und/oder Verbindungskraft ausgewählt oder eingestellt werden. Alternativ oder zusätzlich ist denkbar, dass die Siegelvorrichtung 10a zumindest ein, insbesondere an der Heizeinheit 14a, an der Siegeleinheit 12a und/oder an zumindest einem Lagerelement 16a, 18a angeordnetes, Drucksensorelement aufweist, das dazu vorgesehen ist, eine auf die Heizeinheit 14a, insbesondere auf die Heizelemente 34a, 36a, wirkende Kraft zu erfassen (hier nicht dargestellt). Insbesondere kann die Steuer- und/oder Regeleinheit der Siegelvorrichtung 10a und/oder der Verpackungsmaschine 42a dazu vorgesehen sein, Signale des zumindest einen Drucksensorelements auszuwerten und in Abhängigkeit von der Auswertung die, in einem alternativen Ausführungsbeispiel insbesondere als Motoren ausgebildeten, Lagerelemente 16a, 18a zu einer Positionsänderung der Heizeinheit 14a, insbesondere der Heizelemente 34a, 36a, anzusteuern.

Bevorzugt ist/sind das zumindest eine Lagerelement 16a, 18a, insbesondere die Lagerelemente 16a, 18a, dazu vorgesehen, die zumindest eine Heizeinheit 14a mit einer Anpresskraft gegen die Siegeleinheit 12a zu beaufschlagen. Insbesondere sind die Lagerelemente 16a, 18a dazu vorgesehen, die Heizeinheit 14a, insbesondere die Heizelemente 34a, 36a, mit einer konstanten Anpresskraft gegen die Siegeleinheit 12a zu beaufschlagen, insbesondere während und/oder außerhalb eines Siegelprozesses. Vorzugsweise sind die Lagerelemente 16a, 18a dazu vorgesehen, mittels einer Kraftbeaufschlagung der Heizeinheit 14a, insbesondere der Heizelemente 34a, 36a, einen flächigen Kontakt zwischen der Heizeinheit 14a, insbesondere zwischen den Heizelementen 34a, 36a, und der Siegeleinheit 12a herzustellen. Insbesondere ist/sind die Heizeinheit 14a, insbesondere die Heizelemente 34a, 36a, die mit der Siegeleinheit 12a in Kontakt steht/stehen, dazu vorgesehen, an einer Kontaktfläche 62a mit der Siegeleinheit 12a Wärme auf die Siegeleinheit 12a zu übertragen. Vorzugsweise ist eine benötigte Anpresskraft durch eine Positionierung der Lagerelemente 16a, 18a relativ zu der Siegeleinheit 12a und zu der Heizeinheit 14a, durch eine Wahl einer Elastizitätskenngröße der Lagerelemente 16a, 18a, durch Wahl einer Anzahl und/oder Art von Lagerelementen 16a, 18a, durch eine Kompressionsstrecke der Lagerelemente 16a, 18a und/oder durch weitere, einem Fachmann als sinnvoll erscheinende Parameter einstellbar. Alternativ oder zusätzlich ist vorstellbar, dass eine Anpresskraft der Lagerelemente 16a, 18a mechanisch, elektrisch, motorisch, magnetisch, pneumatisch und/oder hydraulisch, insbesondere automatisch, einstellbar ist. Bevorzugt sind die Lagerelemente 16a, 18a dazu vorgesehen, eine Anpresskraft entlang einer Kraftwirkrichtung 64a, die zumindest im Wesentlichen senkrecht zu der Siegelfläche 44a der Siegeleinheit 12a verläuft, auf die Heizeinheit 14a, insbesondere auf die Heizelemente 34a, 36a, auszuüben. Insbesondere sind die Lagerelemente 16a, 18a dazu vorgesehen, die Heizeinheit 14a, insbesondere die Heizelemente 34a, 36a, gegen eine zumindest im Wesentlichen parallel zu der Siegelfläche 44a verlaufende Kontaktfläche 62a der Siegeleinheit 12a zu pressen. Vorzugsweise ist die Kontaktfläche 62a der Siegelfläche 44a abgewandt.

Bevorzugt ist/sind das zumindest eine Lagerelement 16a, 18a, insbesondere die Lagerelemente 16a, 18a, als ein federelastisches Element/als federelastische Elemente ausgebildet. Vorzugsweise sind die als federelastische Elemente ausgebildeten Lagerelemente 16a, 18a dazu vorgesehen, die Anpresskraft auf die Heizeinheit 14a, insbesondere auf die Heizelemente 34a, 36a, durch eine, insbesondere eigenständige, Rückkehr, insbesondere Ausdehnung, in ihre Ausgangsform auszuüben. Die als federelastische Elemente ausgebildeten Lagerelemente 16a, 18a können insbesondere als Gummielemente, insbesondere als O-Ringe, wie beispielhaft im vorliegenden Ausführungsbeispiel, als Gummibänder, als Gummimatten, als Gummibolzen o. dgl., als Federn, insbesondere als Druckfedern, beispielsweise als Spiralfedern, oder als andere, einem Fachmann als sinnvoll erscheinende federelastische Elemente ausgebildet sein.

Bevorzugt umfasst die Siegelvorrichtung 10a zumindest ein Zwischenlagerelement 22a, 24a, wobei das zumindest eine Lagerelement 16a, 18a, insbesondere die Lagerelemente 16a, 18a, dazu vorgesehen ist/sind, die zumindest eine Heizeinheit 14a mittelbar über das zumindest eine Zwischenlagerelement 22a, 24a beweglich zu lagern. Vorzugsweise umfasst die Siegelvorrichtung 10a eine Mehrzahl von Zwischenlagerelementen 22a, 24a, insbesondere eine Anzahl von Zwischenlagerelementen 22a, 24a entsprechend einer Anzahl von Heizelementen 34a, 36a der Heizeinheit 14a. In Figur 2 sind beispielhaft zwei Zwischenlagerelemente 22a, 24a, insbesondere ein Zwischenlagerelement 22a und ein weiteres Zwischenlagerelement 24a, dargestellt. Bevorzugt ist jeweils einem Heizelement 34a, 36a jeweils ein Zwischenlagerelement 22a, 24a zugeordnet. Im vorliegenden Ausführungsbeispiel ist beispielhaft dem Heizelement 34a das Zwischenlagerelement 22a und dem weiteren Heizelement 36a das weitere Zwischenlagerelement 24a zugeordnet. Insbesondere ist jeweils ein Heizelement 34a, 36a an jeweils einem Zwischenlagerelement 22a, 24a angeordnet, insbesondere befestigt. Im vorliegenden Ausführungsbeispiel ist beispielhaft das Heizelement 34a an dem Zwischenlagerelement 22a und das weitere Heizelement 36a an dem weiteren Zwischenlagerelement 24a angeordnet, insbesondere befestigt. Insbesondere ist jeweils einem Zwischenlagerelement 22a, 24a jeweils zumindest ein Lagerelement 16a, 18a zugeordnet. Im vorliegenden Ausführungsbeispiel ist dem Zwischenlagerelement 22a beispielhaft das Lagerelement 16a und dem weiteren Zwischenlagerelement 24a das weitere Lagerelement 18a zugeordnet. Insbesondere ist das Zwischenlagerelement 22a an dem Lagerelement 16a angeordnet, insbesondere gelagert. Insbesondere ist das weitere Zwischenlagerelement 24a an dem weiteren Lagerelement 18a angeordnet, insbesondere gelagert. Insbesondere ist das Lagerelement 16a an einer Seite des Zwischenlagerelements 22a angeordnet, die einer weiteren Seite des Zwischenlagerelements 22a, an der das Heizelement 34a angeordnet ist, abgewandt ist. Insbesondere ist das weitere Lagerelement 18a an einer Seite des weiteren Zwischenlagerelements 24a angeordnet, die einer weiteren Seite des weiteren Zwischenlagerelements 24a, an der das weitere Heizelement 36a angeordnet ist, abgewandt ist. Vorzugsweise sind die Zwischenlagerelemente 22a, 24a dazu vorgesehen, die Lagerelemente 16a, 18a mechanisch, insbesondere kraftübertragungstechnisch, mit den Heizelementen 34a, 36a zu koppeln. Vorzugsweise sind die Zwischenlagerelemente 22a, 24a starr ausgebildet.

Bevorzugt ist/sind das zumindest eine Zwischenlagerelement 22a, 24a, insbesondere die Zwischenlagerelemente 22a, 24a, wenigstens zu einem Großteil aus einem thermisch isolierenden Material ausgebildet. Vorzugsweise sind die Zwischenlagerelemente 22a, 24a zumindest teilweise aus einem Dämmmaterial, aus einem Stein, aus einer Keramik, aus einem wärmeleitschwachen Metall, beispielsweise aus einer austenitischen Stahllegierung, aus einem thermisch stabilen und isolierenden Kunststoff oder aus einem anderen, einem Fachmann als sinnvoll erscheinenden thermisch isolierenden Material ausgebildet. Vorzugsweise sind die Zwischenlagerelemente 22a, 24a dazu vorgesehen, eine Wärmeübertragung von der Heizeinheit 14a, insbesondere von den Heizelementen 34a, 36a, auf die Entkopplungseinheit 20a, insbesondere auf die Lagerelemente 16a, 18a, zu begrenzen, insbesondere zu verhindern. Insbesondere sind die Zwischenlagerelemente 22a, 24a dazu vorgesehen, eine Energieleitung, insbesondere eine Wärmeleitung, von der Heizeinheit 14a, insbesondere von den Heizelementen 34a, 36a, weg von dem Grundkörper 46a, insbesondere zu der Siegelfläche 44a, zu begünstigen. Vorzugsweise weisen die Zwischenlagerelemente 22a, 24a eine thermische Isolationsfähigkeit und/oder zumindest eine minimale Erstreckung auf, so dass eine Temperatur der Lagerelemente 16a, 18a unabhängig ist von einer Betriebstemperatur der Heizeinheit 14a, insbesondere der Heizelemente 34a, 36a.

Bevorzugt ist/sind das zumindest eine Zwischenlagerelement 22a, 24a, insbesondere die Zwischenlagerelemente 22a, 24a, dazu vorgesehen, die zumindest eine Heizeinheit 14a elektrisch zu kontaktieren und/oder weist/weisen das zumindest eine Zwischenlagerelement 22a, 24a, insbesondere die Zwischenlagerelemente 22a, 24a, zumindest eine Führung 26a, 28a zur Aufnahme von zumindest einem elektrischen Kontaktelement 30a, 32a auf, das zu einer elektrischen Kontaktierung der zumindest einen Heizeinheit 14a vorgesehen ist. Insbesondere sind die Zwischenlagerelemente 22a, 24a und/oder die elektrischen Kontaktelemente 30a, 32a dazu vorgesehen, die Heizeinheit 14a, insbesondere die Heizelemente 34a, 36a, mit elektrischer Energie und/oder Leistung, insbesondere mit elektrischem Strom, zu versorgen. Die elektrischen Kontaktelemente 30a, 32a können insbesondere als Kabel, insbesondere als Flachbandkabel, wie beispielhaft im vorliegenden Ausführungsbeispiel, als Drähte, als Flachbänder oder als andere, einem Fachmann als sinnvoll erscheinende elektrische Kontaktelemente ausgebildet sein. Vorzugsweise umfasst die Siegelvorrichtung 10a zumindest eine Anzahl von elektrischen Kontaktelementen 30a, 32a entsprechend einer Anzahl von Heizelementen 34a, 36a der Heizeinheit 14a. Insbesondere ist jeweils einem Heizelement 34a, 36a jeweils zumindest ein elektrisches Kontaktelement 30a, 32a zugeordnet. Im vorliegenden Ausführungsbeispiel ist beispielhaft dem Heizelement 34a ein elektrisches Kontaktelement 30a und dem weiteren Heizelement 36a ein weiteres elektrisches Kontaktelement 32a zugeordnet. Insbesondere sind die elektrischen Kontaktelemente 30a, 32a elektrisch mit den Heizelementen 34a, 36a verbunden, insbesondere verlötet, mit einem Steckverbinder, mit einem Schraubverbinder o. dgl., und dazu vorgesehen, die Heizelemente 34a, 36a mit elektrischer Energie und/oder Leistung zu versorgen. Vorzugsweise sind die elektrischen Kontaktelemente 30a, 32a elektrisch mit zumindest einer Energieversorgungseinheit der Siegelvorrichtung 10a, beispielsweise einem Netzanschluss, einem Akkumulator, einem Speicherkondensator o. dgl., verbunden (hier nicht weiter dargestellt). Eine Führung 26a, 28a eines Zwischenlagerelements 22a, 24a zur Aufnahme von zumindest einem elektrischen Kontaktelement 30a, 32a kann insbesondere als ein Kanal innerhalb von dem Zwischenlagerelement 22a, 24a, wie beispielhaft im vorliegenden Ausführungsbeispiel, als eine Nut in einer Außenfläche des Zwischenlagerelements 22a, 24a, als zumindest ein an dem Zwischenlagerelement 22a, 24a angeordnetes Klemmelement oder als eine andere, einem Fachmann als sinnvoll erscheinende Führung ausgebildet sein. Im vorliegenden Ausführungsbeispiel ist beispielhaft eine Führung 26a des Zwischenlagerelements 22a zur Aufnahme des elektrischen Kontaktelements 30a und eine Führung 28a des weiteren Zwischenlagerelements 24a zur Aufnahme des weiteren elektrischen Kontaktelements 32a vorgesehen. Insbesondere weist der Grundkörper 46a eine Führung 66a zu einer Aufnahme beider elektrischer Kontaktelemente 30a, 32a auf. Insbesondere sind die elektrischen Kontaktelemente 30a, 32a in der Führung 66a des Grundkörpers 46a den Zwischenlagerelementen 22a, 24a zugeführt. Alternativ oder zusätzlich ist denkbar, dass die Zwischenlagerelemente 22a, 24a selbst als elektrische Kontaktelemente ausgebildet sind und jeweils zumindest einen elektrischen Kontaktpunkt, beispielsweise eine Lötstelle, mit jeweils einem Heizelement 34a, 36a aufweisen. Insbesondere können die Zwischenlagerelemente 22a, 24a in einer alternativen Ausgestaltungsform zu einer Versorgung mit elektrischer Energie auf einer Seite, an der die Lagerelemente 16a, 18a angeordnet sind, von zusätzlichen elektrischen Kontaktelementen der Siegelvorrichtung 10a kontaktiert sein.

Bevorzugt ist/sind das zumindest eine Lagerelement 16a, 18a, insbesondere die Lagerelemente 16a, 18a, als ein O-Ring/als O-Ringe ausgebildet. Vorzugsweise ist die von den als O-Ringen ausgebildeten Lagerelementen 16a, 18a auf die Heizeinheit 14a, insbesondere auf die Heizelemente 34a, 36a, ausgeübte Anpresskraft durch eine Wahl eines Durchmesser der O-Ringe, durch eine Wahl einer Materialzusammensetzung der O-Ringe, durch eine Wahl einer Querschnittsstärke der O-Ringe, durch eine Wahl einer Kompression der O-Ringe und/oder durch eine Wahl einer weiteren, einem Fachmann als sinnvoll erscheinenden Kenngröße der O-Ringe einstellbar. Vorzugsweise sind die als O-Ringe ausgebildeten Lagerelemente 16a, 18a derart angeordnet, insbesondere an dem Grundkörper 46a der Siegelvorrichtung 10a befestigt, dass Ringmittelachsen 68a, 70a der Lagerelemente 16a, 18a sich zumindest im Wesentlichen senkrecht zu der Siegelfläche 44a der Siegeleinheit 12a und insbesondere zumindest im Wesentlichen parallel zu einer Kraftwirkrichtung 64a der auf die Heizeinheit 14a, insbesondere auf die Heizelemente 34a, 36a, wirkenden Anpresskraft erstrecken. Vorzugsweise weisen die als O-Ringe ausgebildeten Lagerelemente 16a, 18a in einem Betriebszustand frei von einer auf die Siegeleinheit 12a wirkenden Prozesskraft und/oder Verbindungskraft einen kreisförmigen Querschnitt auf. Vorzugsweise weisen die als O-Ringe ausgebildeten Lagerelemente 16a, 18a in einem Betriebszustand, in dem eine Prozesskraft und/oder eine Verbindungskraft auf die Siegeleinheit 12a wirkt, wie beispielhaft in Figur 2 dargestellt, eine gegenüber einem kreisförmigen Querschnitt in einer Ausgangsform gestauchte Form, insbesondere einen ellipsenförmigen Querschnitt, auf.

Bevorzugt ist die zumindest eine Heizeinheit 14a zumindest teilweise von einzelnen plattenförmig angeordneten und/oder ausgebildeten Heizelementen 34a, 36a ausgebildet. Vorzugsweise sind die Heizelemente 34a, 36a als Heizplatten ausgebildet. Alternativ ist vorstellbar, dass die Heizelemente 34a, 36a als Dickschichtheizelemente, als pixelweise gedruckte Heizelemente, als Peltier-Elemente oder als andere, einem Fachmann als sinnvoll erscheinende Heizelemente ausgebildet sind. Vorzugsweise weist die Heizeinheit 14a zumindest zwei zumindest im Wesentlichen senkrecht zu der Haupterstreckungsrichtung 50a der Siegeleinheit 12a und zumindest im Wesentlichen parallel zu der Siegelfläche 44a der Siegeleinheit 12a voneinander beabstandete Reihen von Heizelementen 34a, 36a auf, die sich insbesondere zumindest im Wesentlichen parallel zu der Haupterstreckungsrichtung 50a der Siegeleinheit 12a erstrecken. Alternativ ist vorstellbar, dass die Heizeinheit 14a eine einzelne Reihe von Heizelementen 34a, 36a aufweist, die sich zumindest im Wesentlichen parallel zu der Haupterstreckungsrichtung 50a der Siegeleinheit 12a erstreckt. Vorzugsweise sind die Heizelemente 34a, 36a innerhalb einer Reihe entlang der Haupterstreckungsrichtung 50a der Siegeleinheit 12a betrachtet äquidistant zueinander angeordnet.

Bevorzugt umfasst die Siegelvorrichtung 10a zumindest eine, insbesondere schwalbenschwanzartige, Spanneinheit, insbesondere die vorgenannte Spanneinheit 40a, die dazu vorgesehen ist, die zumindest eine Siegeleinheit 12a zu fixieren und die zumindest eine auf die Siegeleinheit 12a wirkende Prozesskraft zumindest teilweise aufzunehmen. Die Spanneinheit 40a umfasst insbesondere den, insbesondere feststehenden, Grundkörper 46a der Siegelvorrichtung 10a und zumindest ein, insbesondere relativ zu dem Grundkörper 46a beweglich gelagertes, Spannelement 72a, 74a. Insbesondere kann die Spanneinheit 40a eine Mehrzahl von Spannelementen 72a, 74a aufweisen, die insbesondere zumindest im Wesentlichen parallel zu der Haupterstreckungsrichtung 50a der Siegeleinheit 12a betrachtet beabstandet zueinander angeordnet sind. Im vorliegenden Ausführungsbeispiel weist die Spanneinheit 40a beispielhaft zwei Spannelemente 72a, 74a, insbesondere ein Spannelement 72a und ein weiteres Spannelement 74a, auf (vgl. Figur 1). Die folgende Beschreibung und die Figur 2 beschränken sich auf das Spannelement 72a. Die Beschreibung und die Figur 2 gelten analog aber auch für das weitere Spannelement 74a, da das weitere Spannelement 74a analog zu dem Spannelement 72a ausgebildet ist. Vorzugsweise bilden der Grundkörper 46a, insbesondere ein Spannfortsatz 76a des Grundkörpers 46a, und das zumindest eine Spannelement 72a eine Befestigungsnut 78a, in der die Siegeleinheit 12a festspannbar ist. Vorzugsweise ist das zumindest eine Spannelement 72a zumindest im Wesentlichen senkrecht zu der Haupterstreckungsrichtung 50a der Siegeleinheit 12a und insbesondere zumindest im Wesentlichen parallel zu der Siegelfläche 44a der Siegeleinheit 12a beweglich an dem Grundkörper 46a gelagert. Vorzugsweise umfasst die Spanneinheit 40a zumindest ein mit dem zumindest einen Spannelement 72a wirkverbundenes Spannbetätigungselement 80a. Im vorliegenden Ausführungsbeispiel umfasst die Spanneinheit 40a beispielhaft auch ein weiteres, mit dem weiteren Spannelement 74a wirkverbundenes und analog zu dem Spannbetätigungselement 80a ausgebildetes Spannbetätigungselement 82a. Insbesondere ist das zumindest eine Spannelement 72a in Abhängigkeit von einer Betätigung des zumindest einen Spannbetätigungselements 80a bewegbar, insbesondere verschiebbar. Das zumindest eine Spannbetätigungselement 80a kann insbesondere als eine Spannschraube, wie beispielhaft im vorliegenden Ausführungsbeispiel, als ein, insbesondere kegeliger, Exzenter, als ein Linearmotor oder als ein anderes, einem Fachmann als sinnvoll erscheinendes Spannbetätigungselement ausgebildet sein.

Insbesondere ist die Siegeleinheit 12a durch eine Bewegung des zumindest einen Spannelements 72a in Richtung des Spannfortsatzes 76a des Grundkörpers 46a zwischen dem zumindest einen Spannelement 72a und dem Spannfortsatz 76a des Grundkörpers 46a festspannbar. Insbesondere ist die Siegeleinheit 12a in einem festgespannten Zustand, insbesondere schwalbenschwanzartik, formschlüssig zwischen dem zumindest einen Spannelement 72a und dem Spannfortsatz 76a des Grundkörpers 46a fixiert. Insbesondere bildet die Siegeleinheit 12a zumindest im Wesentlichen einen Spund einer Schwalbenschwanzverbindung mit der Spanneinheit 40a aus, wobei insbesondere das zumindest eine Spannelement 72a und der Spannfortsatz 76a des Grundkörpers 46a an Schrägflächen 84a der Siegeleinheit 12a anliegen. Vorzugsweise ist die Siegeleinheit 12a durch eine Bewegung des zumindest einen Spannelements 72a von dem Spannfortsatz 76a des Grundkörpers 46a weg freigebbar, insbesondere zu einem Wechsel der Siegeleinheit 12a. Vorzugsweise ist die Spanneinheit 40a, insbesondere der Grundkörper 46a, dazu vorgesehen, zumindest an den Anlageflächen 58a des Grundkörpers 46a die auf die Siegeleinheit 12a wirkende Prozesskraft und Spannkräfte zumindest teilweise aufzunehmen.

Figur 3 zeigt das Heizelement 34a der Heizeinheit 14a der Siegelvorrichtung 10a aus Figur 2 in einer schematischen Darstellung. Bevorzugt weist die zumindest eine Heizeinheit 14a, insbesondere zumindest ein Heizelement 34a, 36a der Heizeinheit 14a, zumindest eine, insbesondere spezifische, Kontur 38a auf. Die folgende Beschreibung und die Figur 3 beschränken sich im Wesentlichen auf das in Figur 3 gezeigte Heizelement 34a. Die Beschreibung und die Figur 3 gelten analog aber auch für das weitere Heizelement 36a, da das weitere Heizelement 36a analog zu dem Heizelement 34a ausgebildet ist. Insbesondere können die Heizelemente 34a, 36a auf einer mit der Siegeleinheit 12a, insbesondere mit der Kontaktfläche 62a der Siegeleinheit 12a, in Kontakt stehenden Seite 86a die Kontur 38a aufweisen. Vorzugsweise kann die Kontur 38a in die, insbesondere als Heizplatten ausgebildeten, Heizelemente 34a, 36a geätzt, gelasert, gestanzt, gefräst, gebogen, gepresst oder auf eine andere, einem Fachmann als sinnvoll erscheinende Bearbeitungsart eingebracht sein. Vorzugsweise können die, insbesondere in einer alternativen Ausgestaltungsform als pixelweise gedruckte Heizelemente ausgebildeten, Heizelemente 34a, 36a mit einer Kontur 38a gedruckt sein. Vorzugsweise ist die Kontur 38a der Heizelemente 34a, 36a korrespondierend zu einer Kontur der Kontaktfläche 62a der Siegeleinheit 12a ausgebildet, insbesondere dazu vorgesehen, mit der Kontur der Kontaktfläche 62a der Siegeleinheit 12a zusammenzuwirken. Vorzugsweise sind die Lagerelemente 16a, 18a dazu vorgesehen, die Heizelemente 34a, 36a derart mit einer Anpresskraft gegen die Siegeleinheit 12a zu beaufschlagen, dass die Kontur 38a der Heizelemente 34a, 36a mit der Kontur der Kontaktfläche 62a der Siegeleinheit 12a in Eingriff steht. Insbesondere ist denkbar, dass abhängig von unterschiedlichen Konturen 38a der Heizelemente 34a, 36a unterschiedliche Anpresskräfte einstellbar sind.

Im Folgenden wird ein Verfahren zu einem Wechsel von zumindest einer Siegeleinheit, insbesondere der vorgenannten Siegeleinheit 12a, zumindest einer Siegelvorrichtung, insbesondere der vorgenannten Siegelvorrichtung 10a, wobei zumindest eine Heizeinheit, insbesondere die vorgenannte Heizeinheit 14a, der Siegelvorrichtung 10a wechselfrei verbleibt, beschrieben, insbesondere anhand der Figuren 1 bis 3. Vorzugsweise werden zu einem Wechsel der Siegeleinheit 12a die Spannelemente 72a, 74a von dem Spannfortsatz 76a des Grundkörpers 46a wegbewegt und insbesondere die Siegeleinheit 12a aus der Spanneinheit 40a entnommen. Anschließend kann eine andere Siegeleinheit in die Spanneinheit 40a eingesetzt werden und durch eine Bewegung der Spannelemente 72a, 74a in Richtung des Spannfortsatzes 76a des Grundkörpers 46a festgespannt werden. Vorzugsweise wird/werden die Heizeinheit 14a, insbesondere die Heizelemente 34a, 36a, durch die Lagerelemente 16a, 18a automatisch in Kontakt mit der anderen Siegeleinheit gebracht.

Hinsichtlich weiterer Verfahrensschritte des Verfahrens zu einem Wechsel der Siegeleinheit 12a darf auf die vorhergehende Beschreibung der Siegelvorrichtung 10a verwiesen werden, da diese Beschreibung analog auch auf das Verfahren zu lesen ist und somit alle Merkmale hinsichtlich der Siegelvorrichtung 10a auch in Bezug auf das Verfahren zu einem Wechsel der Siegeleinheit 12a als offenbart gelten.

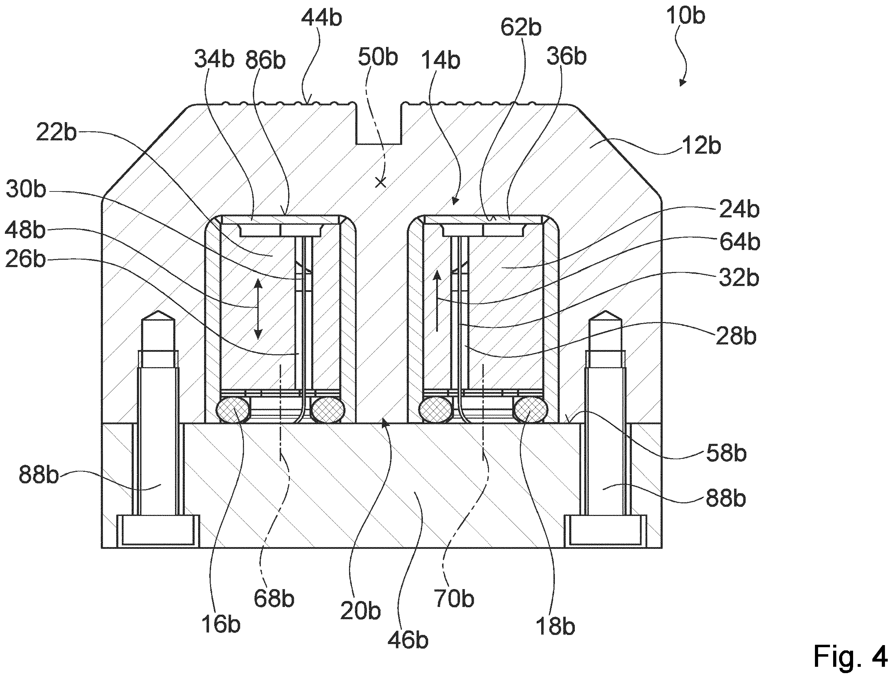

In der Figur 4 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In dem Ausführungsbeispiel der Figur 4 ist der Buchstabe a durch den Buchstaben b ersetzt.

Figur 4 zeigt eine Schnittansicht eines Teils einer alternativen Siegelvorrichtung 10b, insbesondere einer alternativen Siegelbacke, in einer schematischen Darstellung. Die Siegelvorrichtung 10b umfasst vorzugsweise eine Siegeleinheit 12b zu einer Erstellung einer Siegelnaht, zumindest eine Heizeinheit 14b zu einer Erhitzung der Siegeleinheit 12b und Lagerelemente 16b, 18b, die dazu vorgesehen sind, die Heizeinheit 14b, insbesondere Heizelemente 34b, 36b der Heizeinheit 14b, beweglich zu lagern. Bevorzugt umfasst die Siegelvorrichtung 10b zumindest eine Entkopplungseinheit 20b, die dazu vorgesehen ist, die zumindest eine Heizeinheit 14b von zumindest einer auf die Siegeleinheit 12b wirkenden Prozesskraft und/oder Verbindungskraft zumindest teilweise zu entkoppeln. Im vorliegenden Ausführungsbeispiel ist die Siegelvorrichtung 10b beispielhaft frei von einer Spanneinheit ausgebildet. Insbesondere ist die Siegeleinheit 12b direkt mit einem Grundkörper 46b der Siegelvorrichtung, insbesondere kraft- und/oder formschlüssig, verbunden. Insbesondere weist die Siegelvorrichtung 10b Fixierelemente 88b, insbesondere Schrauben, auf, die dazu vorgesehen sind, die Siegeleinheit 12b mit dem Grundkörper 46b zu verbinden. Vorzugsweise ist die Siegeleinheit 12b, insbesondere mittels der Fixierelemente 88b, mit dem Grundkörper 46b verschraubt. Vorzugsweise erstrecken sich die Fixierelemente 88b zumindest im Wesentlichen parallel zu einer Bewegungsrichtung 48b, entlang von der die Lagerelemente 16b, 18b die Heizeinheit 14b, insbesondere die Heizelemente 34b, 36b, beweglich lagern, zumindest abschnittsweise durch den Grundkörper 46b und durch die Siegeleinheit 12b. Vorzugsweise umschließt die Siegeleinheit 12b die Lagerelemente 16b, 18b, die Heizelemente 34b, 36b und Zwischenlagerelemente 22b, 24b der Siegelvorrichtung 10b zumindest teilweise.

## Patentansprüche

1. Siegelvorrichtung, insbesondere Siegelbacke, mit zumindest einer, insbesondere wechselbaren, Siegeleinheit (12a; 12b) zu einer Erstellung einer Siegelnaht, mit zumindest einer Heizeinheit (14a; 14b) zu einer Erhitzung der Siegeleinheit (12a; 12b), mit zumindest einem Lagerelement (16a; 16b, 18a; 18b), das dazu vorgesehen ist, die zumindest eine Heizeinheit (14a; 14b) beweglich zu lagern, und mit zumindest einer Entkopplungseinheit (20a; 20b), die dazu vorgesehen ist, die zumindest eine Heizeinheit (14a; 14b) von zumindest einer auf die Siegeleinheit (12a; 12b) wirkenden Prozesskraft und/oder Verbindungskraft zumindest teilweise zu entkoppeln, **dadurch gekennzeichnet, dass** das zumindest eine Lagerelement (16a; 16b, 18a; 18b) dazu vorgesehen ist, die zumindest eine Heizeinheit (14a; 14b) mit einer Anpresskraft gegen die Siegeleinheit (12a; 12b) zu beaufschlagen.

2. Siegelvorrichtung nach Anspruch 1, **dadurch gekennzeichnet, dass** die Entkopplungseinheit (20a; 20b) das zumindest eine Lagerelement (16a; 16b, 18a; 18b) umfasst, das dazu vorgesehen ist, die zumindest eine Heizeinheit (14a; 14b) von der zumindest einen auf die Siegeleinheit (12a; 12b) wirkenden Prozesskraft und/oder Verbindungskraft zumindest teilweise zu entkoppeln.

3. Siegelvorrichtung nach einem der vorhergehenden Ansprüche, **dadurch gekennzeichnet, dass** das zumindest eine Lagerelement (16a; 16b, 18a; 18b) als ein federelastisches Element ausgebildet ist.

4. Siegelvorrichtung nach einem der vorhergehenden Ansprüche, **gekennzeichnet durch** zumindest ein Zwischenlagerelement (22a; 22b, 24a; 24b), wobei das zumindest eine Lagerelement (16a; 16b, 18a; 18b) dazu vorgesehen ist, die zumindest eine Heizeinheit (14a; 14b) mittelbar über das zumindest eine Zwischenlagerelement (22a; 22b, 24a; 24b) beweglich zu lagern.

5. Siegelvorrichtung nach Anspruch 4, **dadurch gekennzeichnet, dass** das zumindest eine Zwischenlagerelement (22a; 22b, 24a; 24b) wenigstens zu einem Großteil aus einem thermisch isolierenden Material ausgebildet ist.

6. Siegelvorrichtung nach Anspruch 4 oder 5, **dadurch gekennzeichnet, dass** das zumindest eine Zwischenlagerelement (22a; 22b, 24a; 24b) dazu vorgesehen ist, die zumindest eine Heizeinheit (14a; 14b) elektrisch zu kontaktieren und/oder dass das zumindest eine Zwischenlagerelement (22a; 22b, 24a; 24b) zumindest eine Führung (26a; 26b, 28a; 28b) zur Aufnahme von zumindest einem elektrischen Kontaktelement (30a; 30b, 32a; 32b) aufweist, das zu einer elektrischen Kontaktierung der zumindest einen Heizeinheit (14a; 14b) vorgesehen ist.

7. Siegelvorrichtung nach einem der vorhergehenden Ansprüche, **dadurch gekennzeichnet, dass** das zumindest eine Lagerelement (16a; 16b, 18a; 18b) als ein O-Ring ausgebildet ist.

8. Siegelvorrichtung nach einem der vorhergehenden Ansprüche, **dadurch gekennzeichnet, dass** die zumindest eine Heizeinheit (14a; 14b) zumindest teilweise von einzelnen plattenförmig angeordneten und/oder ausgebildeten Heizelementen (34a; 34b, 36a; 36b) ausgebildet ist.

9. Siegelvorrichtung nach einem der vorhergehenden Ansprüche, **dadurch gekennzeichnet, dass** die zumindest eine Heizeinheit (14a; 14b), insbesondere zumindest ein Heizelement (34a; 34b, 36a; 36b) der Heizeinheit (14a; 14b), zumindest eine Kontur (38a) aufweist.

10. Siegelvorrichtung nach einem der vorhergehenden Ansprüche, **gekennzeichnet durch** zumindest eine, insbesondere schwalbenschwanzartige, Spanneinheit (40a), die dazu vorgesehen ist, die zumindest eine Siegeleinheit (12a) zu fixieren und die zumindest eine auf die Siegeleinheit (12a) wirkende Prozesskraft zumindest teilweise aufzunehmen.

11. Verpackungsmaschine, insbesondere Schlauchbeutelmaschine, mit zumindest einer Siegelvorrichtung nach einem der vorhergehenden Ansprüche.

12. Verfahren zu einem Wechsel von zumindest einer Siegeleinheit (12a) zumindest einer Siegelvorrichtung nach einem der Ansprüche 1 bis 10, wobei zumindest eine Heizeinheit (14a) der Siegelvorrichtung wechselfrei verbleibt.

## Claims

1. Sealing device, in particular a sealing jaw, comprising at least one, in particular exchangeable, sealing unit (12a; 12b) for creating a sealing seam, at least one heating unit (14a; 14b) for heating the sealing unit (12a; 12b), at least one bearing element (16a; 16b, 18a; 18b) which is provided for movably supporting the at least one heating unit (14a; 14b), and at least one decoupling unit (20a; 20b) which is provided for at least partially decoupling the at least one heating unit (14a; 14b) from at least one process force and/or connecting force acting on the sealing unit (12a; 12b), **characterized in that** the at least one bearing element (16a; 16b, 18a; 18b) is provided to apply a pressing force to the at least one heating unit (14a; 14b) against the sealing unit (12a; 12b).

2. Sealing device according to claim 1, **characterized in that** the decoupling unit (20a; 20b) comprises the at least one bearing element (16a; 16b, 18a; 18b) which is provided to at least partially decouple the at least one heating unit (14a; 14b) from the at least one process force and/or connecting force acting on the sealing unit (12a; 12b).

3. Sealing device according to any of the preceding claims,
**characterized in that** the at least one bearing element (16a; 16b, 18a; 18b) is designed as a resilient element.

4. Sealing device according to any of the preceding claims,
**characterized by** at least one intermediate bearing element (22a; 22b, 24a; 24b), the at least one bearing element (16a; 16b, 18a; 18b) being provided to movably support the at least one heating unit (14a; 14b) indirectly via the at least one intermediate bearing element (22a; 22b, 24a; 24b).

5. Sealing device according to claim 4, **characterized in that** the at least one intermediate bearing element (22a; 22b, 24a; 24b) is formed at least substantially from a thermally insulating material.

6. Sealing device according to either claim 4 or 5, **characterized in that** the at least one intermediate bearing element (22a; 22b, 24a; 24b) is provided to electrically contact the at least one heating unit (14a; 14b) **and/or in that** the at least one intermediate bearing element (22a; 22b, 24a; 24b) has at least one guide (26a; 26b, 28a; 28b) for receiving at least one electrical contact element (30a; 30b, 32a; 32b) which is provided for electrically contacting the at least one heating unit (14a; 14b).

7. Sealing device according to any of the preceding claims,
**characterized in that** the at least one bearing element (16a; 16b, 18a; 18b) is designed as an O-ring.

8. Sealing device according to any of the preceding claims,
**characterized in that** the at least one heating unit (14a; 14b) is at least partially formed by individual heating elements (34a; 34b, 36a; 36b) arranged and/or formed in a planar manner.

9. Sealing device according to any of the preceding claims,
**characterized in that** the at least one heating unit (14a; 14b), in particular at least one heating element (34a; 34b, 36a; 36b) of the heating unit (14a; 14b), has at least one contour (38a).

10. Sealing device according to any of the preceding claims,
**characterized by** at least one, in particular dovetail-like, clamping unit (40a) which is provided to fix the at least one sealing unit (12a) and to at least partially absorb the at least one process force acting on the sealing unit (12a).

11. Packaging machine, in particular a form-fill-seal machine, comprising at least one sealing device according to any of the preceding claims.

12. Method for exchanging at least one sealing unit (12a) of at least one sealing device according to any of claims 1 to 10, wherein at least one heating unit (14a) of the sealing device is not exchanged.

## Revendications

1. Dispositif de scellement, en particulier mâchoire de scellement, comportant au moins une unité de scellement (12a ; 12b), en particulier interchangeable, pour une réalisation d'un cordon de scellement, comportant au moins une unité de chauffage (14a ; 14b) pour un chauffage de l'unité de scellement (12a ; 12b), comportant au moins un élément de support (16a ; 16b, 18a ; 18b) qui est prévu pour supporter de manière mobile l'au moins une unité de chauffage (14a ; 14b), et comportant au moins une unité de désolidarisation (20a ; 20b) qui est prévue pour désolidariser au moins partiellement l'au moins une unité de chauffage (14a ; 14b) d'au moins une force de processus et/ou force de liaison agissant sur l'unité de scellement (12a ; 12b), **caractérisé en ce que** l'au moins un élément de support (16a ; 16b, 18a ; 18b) est prévu pour solliciter l'au moins une unité de chauffage (14a ; 14b) avec une force de pression contre l'unité de scellement (12a ; 12b).

2. Dispositif de scellement selon la revendication 1, **caractérisé en ce que** l'unité de désolidarisation (20a ; 20b) comprend l'au moins un élément de support (16a ; 16b, 18a ; 18b) qui est prévu pour désolidariser au moins partiellement l'au moins une unité de chauffage (14a ; 14b) de l'au moins une force de processus et/ou force de liaison agissant sur l'unité de scellement (12a ; 12b).

3. Dispositif de scellement selon l'une des revendications précédentes, **caractérisé en ce que** l'au moins un élément de support (16a ; 16b, 18a ; 18b) est réalisé sous la forme d'un élément élastique.

4. Dispositif de scellement selon l'une des revendications précédentes, **caractérisé par** au moins un élément de support intermédiaire (22a ; 22b, 24a ; 24b), dans lequel l'au moins un élément de support (16a ; 16b, 18a ; 18b) est prévu pour supporter de manière mobile l'au moins une unité de chauffage (14a ; 14b) indirectement par l'intermédiaire de l'au moins un élément de support intermédiaire (22a ; 22b, 24a ; 24b).

5. Dispositif de scellement selon la revendication 4, **caractérisé en ce que** l'au moins un élément de support intermédiaire (22a ; 22b, 24a ; 24b) est réalisé au moins en grande partie en un matériau thermiquement isolant.

6. Dispositif de scellement selon la revendication 4 ou 5,
**caractérisé en ce que** l'au moins un élément de support intermédiaire (22a ; 22b, 24a ; 24b) est prévu pour entrer en contact électriquement avec l'au moins une unité de chauffage (14a ; 14b) **et/ou en ce que** l'au moins un élément de support intermédiaire (22a ; 22b, 24a ; 24b) présente au moins un guide (26a ; 26b, 28a ; 28b) pour la réception d'au moins un élément de contact électrique (30a ; 30b, 32a ; 32b) qui est prévu pour une mise en contact électrique avec l'au moins une unité de chauffage (14a ; 14b).

7. Dispositif de scellement selon l'une des revendications précédentes, **caractérisé en ce que** l'au moins un élément de support (16a ; 16b, 18a ; 18b) est réalisé en tant que joint torique.

8. Dispositif de scellement selon l'une des revendications précédentes, **caractérisé en ce que** l'au moins une unité de chauffage (14a ; 14b) est réalisée au moins partiellement par des éléments chauffants (34a ; 34b, 36a ; 36b) individuels disposés et/ou réalisés en forme de plaque.

9. Dispositif de scellement selon l'une des revendications précédentes, **caractérisé en ce que** l'au moins une unité de chauffage (14a ; 14b), en particulier au moins un élément chauffant (34a ; 34b, 36a ; 36b) de l'unité de chauffage (14a ; 14b), présente au moins un contour (38a).

10. Dispositif de scellement selon l'une des revendications précédentes, **caractérisé par** au moins une unité de serrage (40a), en particulier en forme de queue d'aronde, qui est prévue pour fixer l'au moins une unité de scellement (12a) et pour absorber au moins partiellement l'au moins une force de processus agissant sur l'unité de scellement (12a).

11. Machine d'emballage, en particulier ensacheuse, comportant au moins un dispositif de scellement selon l'une des revendications précédentes.

12. Procédé pour le changement d'au moins une unité de scellement (12a) d'au moins un dispositif de scellement selon l'une des revendications 1 à 10, dans lequel au moins une unité de chauffage (14a) du dispositif de scellement reste sans changement.
